# EUROPÄISCHE PATENTSCHRIFT

(11) **EP 3 931 026 B1**
(45) Veröffentlichungstag und Bekanntmachung des Hinweises auf die Patenterteilung: **12.07.2023**
(21) Anmeldenummer: 20706449.4
(22) Anmeldetag: 19.02.2020
(51) Int. Cl.: B60K 35/00

(54) **VERFAHREN ZUM BETREIBEN EINES FAHRERINFORMATIONSSYSTEMS IN EINEM EGO-FAHRZEUG UND FAHRERINFORMATIONSSYSTEM**
METHOD FOR OPERATING A DRIVER INFORMATION SYSTEM IN AN EGO-VEHICLE AND DRIVER INFORMATION SYSTEM
PROCÉDÉ POUR FAIRE FONCTIONNER UN SYSTÈME D'INFORMATION DU CONDUCTEUR DANS UN ÉGO-VÉHICULE ET SYSTÈME D'INFORMATION DU CONDUCTEUR

(30) Priorität: 26.02.2019 DE 102019202591
(43) Veröffentlichungstag der Anmeldung: 05.01.2022
(73) Patentinhaber: VOLKSWAGEN AKTIENGESELLSCHAFT, 38440 Wolfsburg (DE)
(72) Erfinder: SEITZ, Gordon, 38468 Ehra-Lessien (DE)
(86) Internationale Anmeldenummer: PCT/EP2020/054319
(87) Internationale Veröffentlichungsnummer: WO 2020/173778

(56) Entgegenhaltungen:
- EP-A1- 3 269 579
- DE-A1-102009 031 087
- DE-A1-102011 121 847
- DE-A1-102016 212 688
- DE-B4-112006 002 262
- FR-A1- 3 056 804
- US-A1- 2011 199 198
- US-A1- 2011 301 813
- US-A1- 2018 370 567

## Beschreibung

Die vorliegende Erfindung betrifft ein Verfahren zum Betreiben eines Fahrerinformationssystems in einem Ego-Fahrzeug sowie ein Fahrerinformationssystem in einem Ego-Fahrzeug.

Moderne Fahrzeuge bieten oft eine umfassende Auswahl verschiedener Systeme, die den Fahrer bei der Steuerung des Fahrzeugs unterstützen und damit zu einer Verbesserung des Komforts und der Sicherheit beitragen. Eine der Herausforderungen in diesem Zusammenhang besteht darin, die Schnittstelle zwischen dem menschlichen Fahrer und der typischerweise rechnerbasierten Steuerung so zu gestalten, dass dem Fahrer alle benötigten und gewünschten Informationen möglichst schnell und leicht erfassbar bereitgestellt werden. Erst dann können die Unterstützungsmöglichkeiten optimal verstanden und genutzt werden. Zudem muss der Fahrer zu jedem Zeitpunkt genau wissen, wie sich sein Fahrzeug in einer bestimmten Situation verhalten wird, welche Unterstützungssysteme aktuell aktiv sind und ob ihre optimale Funktion gewährleistet ist. Er sollte ferner stets wissen, wie die Systeme funktionieren und in welchem Maße manuelle Eingriff notwendig sind. Ein Verfahren zum Betreiben eines Fahrerinformationssystems und ein Fahrerinformationssystem mit den Merkmale der Präambeln der unabhängigen Ansprüche sind aus der FR3056804 A1 bekannt.

Nachfolgend wird unter einem Fahrerassistenzsystem eine Einrichtung eines Fahrzeugs verstanden, welche den Fahrer beim Fahren des Fahrzeugs unterstützt. Derartige Fahrerassistenzsysteme können als reine Informationssysteme ausgebildet sein, die den Fahrer unterstützen, sie können jedoch auch Einrichtungen ansteuern und regeln, die automatisch die Fortbewegung des Fahrzeugs beeinflussen.

Durch die Verwendung von Fahrerassistenzsystemen können verschiedene Grade von Automatisierung der Fahrzeugsteuerung erreicht werden. Ohne ein aktiviertes Fahrerassistenzsystem beeinflusst der Fahrer direkt die Bewegung des Fahrzeugs. Es werden allenfalls Signale oder Bewegungen von durch den Fahrer betätigten Bedienelementen, wie der Pedalerie, dem Schaltknüppel oder dem Lenkrad, an entsprechende Einrichtungen des Fahrzeugs übertragen, welche die Fortbewegung des Fahrzeugs beeinflussen. Eine derartige Fortbewegung des Fahrzeugs entspricht dem geringsten Grad der Automatisierung.

Bei einem höheren Grad der Automatisierung wird zum Teil automatisch in Einrichtungen eingegriffen, welche der Fortbewegung des Fahrzeugs dienen. Beispielsweise wird in die Lenkung des Fahrzeugs oder die Beschleunigung in positiver oder negativer Richtung eingegriffen. Bei einem noch höheren Grad der Automatisierung wird soweit in Einrichtungen des Fahrzeugs eingegriffen, dass bestimmte Fortbewegungsarten des Fahrzeugs, zum Beispiel eine Geradeausfahrt, automatisch ausgeführt werden können. Beim höchsten Grad der Automatisierung können etwa Routen eines Navigationssystems im Wesentlichen automatisch gefahren werden oder das Fahrzeug kann beispielsweise auf einer Autobahn auch ohne eine vorgegebene Route automatisiert fahren. Dabei wird jedoch in der Regel sichergestellt, dass der Fahrer auch bei einem hohen Automatisierungsgrad die Kontrolle über die Fahrzeugführung durch aktives Lenken oder Betätigen der Pedalerie sofort wieder zurückgewinnen kann. Zudem kann die Kontrolle an den Fahrer zurückgegeben werden, wenn ein Systemfehler auftritt oder eine nicht automatisch befahrbare Strecke erkannt wird.

Dabei erfüllen die verschiedenen Fahrerassistenzsysteme auch verschiedene Sicherheitsfunktionen. Bei einem geringen Grad der Automatisierung werden dem Fahrer über ein Fahrerassistenzsystem oder mehrere Fahrerassistenzsysteme nur Informationen ausgegeben, die den Fahrer in der Art und Weise, wie er das Fahrzeug fortbewegt, beeinflussen. In einem höheren Grad der Sicherheitsfunktionen werden Warnungen ausgegeben, die eine unmittelbare Reaktion des Fahrers erfordern. Bei diesem Grad der Automatisierung greifen die Fahrerassistenzsysteme jedoch nicht aktiv und automatisch in die Funktion der Einrichtungen ein, welche die Fortbewegung des Fahrzeugs beeinflussen. In einem noch höheren Grad der Automatisierung wird zum Teil automatisch in Einrichtungen eingegriffen, welche der Fortbewegung des Fahrzeugs dienen. Bei einem noch höheren Grad der Automatisierung wird soweit in Einrichtungen des Fahrzeugs eingegriffen, welche die Fortbewegung des Fahrzeugs beeinflussen, dass bestimmte Manöver des Fahrzeugs automatisch ausgeführt werden können, wie beispielsweise eine Vollbremsung oder ein gezieltes Ausweichmanöver, um eine Kollision zu vermeiden.

Durch die Hinweise, die von Fahrerassistenzsystemen ausgegeben werden, wird der Fahrer des Fahrzeugs auf bestimmte Gefahren aufmerksam gemacht. Dies erhöht die Sicherheit beim Führen des Fahrzeugs. Bei einem aktiven Eingriff eines Fahrerassistenzsystems in die Fortbewegung des Fahrzeugs können auch dann gefährliche Fahrsituationen, wie Kollisionen oder unkontrollierte Bewegungen des Fahrzeugs, vermieden werden, wenn der Fahrer nicht direkt in das Fahrgeschehen eingreift. Bei den Sicherheitsfunktionen des Fahrerassistenzsystems behält jedoch der Fahrer insbesondere stets die volle Kontrolle und Verantwortung über die Fahrsituation. Das Fahrerassistenzsystem greift zum Beispiel bei einer Kollisionsgefahr ein oder wenn der Fahrer etwa aus gesundheitlichen Gründen nicht mehr in der Lage ist, das Fahrzeug zu führen.

Neben der gegebenenfalls direkten Einwirkung auf die Steuerung des Fahrzeugs ist bei Fahrerassistenzsystemen typischerweise vorgesehen, dass der Fahrer mit einer bestimmten Detailtiefe über die Tätigkeit des Fahrerassistenzsystems informiert wird. Beispielsweise kann dies mittels optisch, akustisch oder haptisch wahrnehmbarer Signale erfolgen. Dadurch wird sichergestellt, dass der Fahrer den Einfluss eines Fahrerassistenzsystems auf die Fahrt einschätzen und gegebenenfalls steuernd eingreifen kann: Ferner soll der Fahrer typischerweise automatische Eingriffe in die Steuerung frühzeitig erkennen, um nicht von ihnen überrascht zu werden.

Fahrerassistenzsysteme, die teilweise automatisch in die Steuerung des Fahrzeugs eingreifen können und/oder durch Warnungen auf potentielle Gefahrensituationen hinweisen, können insbesondere eine Quersteuerung oder eine Längssteuerung des Fahrzeugs betreffen. Auch Kombinationen dieser grundlegenden Elemente der Fahrzeugsteuerung sind denkbar. Die Quersteuerungskomponente betrifft insbesondere die Position des Fahrzeugs senkrecht zur Fahrtrichtung, also etwa die sogenannte Querablage auf einer Fahrspur oder Fahrbahn. So kann etwa ein Assistent zum Halten einer Spur das Überfahren einer Fahrspurbegrenzung vermeiden oder das Fahrzeug kann in der Mitte einer Fahrspur geführt werden. Ferner kann der Fahrer bei einem Spurwechsel oder bei einem Überholvorgang unterstützt werden. Die Längssteuerung betrifft insbesondere die Geschwindigkeit des Fahrzeugs in Fahrtrichtung, die beispielsweise in Abhängigkeit von gesetzlichen Bestimmungen und Straßenbedingungen sowie einem einzuhaltenden Sicherheitsabstand zu anderen Verkehrsteilnehmern bestimmt wird. Ein entsprechendes Fahrerassistenzsystem kann den Fahrer etwa beim Halten einer vorgegebenen Geschwindigkeit und/oder eines Abstandes zu einem vorausfahrenden Fahrzeug unterstützen. Ferner kann vermieden werden, dass das eigene Ego-Fahrzeug auf einer bestimmten Seite überholt; insbesondere wird ein Rechtsüberholen bei Rechtsverkehr beziehungsweise ein Linksüberholen bei Linksverkehr vermieden oder es werden entsprechende Warnungen erzeugt.

Von besonderer Bedeutung zur Beurteilung einer Fahrsituation ist der Zustand der Fahrbahn, auf der sich das Fahrzeug bewegt. Dies kann insbesondere bei schlechter Sicht eine Herausforderung für den Fahrer darstellen, obwohl gerade in diesen Situationen eine möglichst umfassende Information über Merkmale der Oberfläche notwendig ist.

Der vorliegenden Erfindung liegt die Aufgabe zugrunde, ein Verfahren zum Betreiben eines Fahrerinformationssystems in einem Ego-Fahrzeug bereitzustellen, bei dem der Fahrer besonders schnell und sicher erfassen kann, inwieweit er seine Fahrweise an die äußeren Bedingungen anpassen muss.

Erfindungsgemäß wird diese Aufgabe durch ein Verfahren mit den Merkmalen des Anspruchs 1 und ein Fahrerinformationssystem mit den Merkmalen des Anspruchs 8 gelöst. Vorteilhafte Ausgestaltungen und Weiterbildungen ergeben sich aus den abhängigen Ansprüchen.

Bei dem erfindungsgemäßen Verfahren werden Wetterdaten für einen in Fahrtrichtung vor dem Ego-Fahrzeug liegenden Fahrbahnabschnitt erfasst. Es wird eine Fahrerinformationsanzeige erzeugt und ausgegeben, wobei die Fahrerinformationsanzeige ein grafisches Fahrspurobjekt umfasst, das den vor dem Ego-Fahrzeug liegenden Fahrbahnabschnitt repräsentiert. Dabei weist das grafische Fahrspurobjekt einen Darstellungsparameter auf, der in Abhängigkeit von den Wetterdaten gebildet wird.

Der Fahrer kann somit vorteilhafterweise einfach erfassen, ob die Bedingungen auf dem vor dem Ego-Fahrzeug liegenden Fahrbahnabschnitt ein Eingreifen in die Steuerung des Ego-Fahrzeugs notwendig machen.

Die erfassten Wetterdaten können unterschiedliche Informationen umfassen, die insbesondere die zum Befahren relevanten Eigenschaften einer Fahrbahnoberfläche beeinflussen. Solche relevanten Eigenschaften beeinflussen die Übertragung von Kräften zwischen der Fahrbahnoberfläche und Reifen eines Fahrzeugs.

Bei einer Ausbildung des erfindungsgemäßen Verfahrens betreffen die Wetterdaten einen Niederschlag und/oder eine Temperatur. Der Fahrer kann daher vorteilhafterweise besonder relevante Einflüsse leicht erfassen.

Relevant ist dabei beispielsweise Nässe durch aktuellen Regen oder Regen in einer näheren Vergangenheit, Hagel, Schneefall, Reif, oder Eis. Auch die im Bereich des Fahrbahnabschnitts herrschende Temperatur, zum aktuellen oder zu einem vergangenen Zeitpunkt, kann Einfluss auf die Eigenschaften der Fahrbahnoberfläche haben, insbesondere bei Temperaturen unter oder über dem Gefrierpunkt. Auch die Windverhältnisse können berücksichtigt werden, wenn etwa Schneeverwehungen zu befürchten sind oder die Fahrbahnoberfläche schneller ausgekühlt wird.

Die erfassten Wetterdaten betreffen dabei einen Fahrbahnabschnitt, der in Fahrtrichtung vor dem Ego-Fahrzeug liegt, das heißt, der in naher Zukunft von diesem befahren werden soll. Um diesen Fahrbahnabschnitt zu bestimmen, kann angenommen werden, dass die gesamte Fahrbahn auf der aktuellen Fahrspur des Ego-Fahrzeugs bis zu einem bestimmten Abstand, etwa 150 m oder 250 m, relevant ist. Der Fahrbahnabschnitt kann ferner anhand einer geplanten Route bestimmt werden, die beispielsweise durch ein Navigationssystem bereitgestellt wird und die es erlaubt, auch einen Fahrbahnabschnitt zu berücksichtigen, der beispielsweise hinter einer Kurve oder Abbiegung gelegen ist.

Die Wetterdaten können auf unterschiedliche Weisen erfasst werden. Bei einer weiteren Ausbildung werden die Wetterdaten mittels Sensoren des Ego-Fahrzeugs erfasst, etwa einem Temperatur- oder Regensensor oder einer Kamera. Die Erfassung erfolgt dadurch vorteilhafterweise selbständig anhand von Mitteln des Ego-Fahrzeugs.

Bei einer Weiterbildung wird eine Position des Ego-Fahrzeugs erfasst und die Wetterdaten werden anhand der erfassten Position erfasst. Dadurch können vorteilhafterweise spezialisierte Erfassungseinrichtungen genutzt werden.

Dabei wird insbesondere die aktuelle Position des Ego-Fahrzeugs erfasst oder es wird eine zukünftige Position prognostiziert, an der sich das Ego-Fahrzeug in näherer Zukunft befinden wird. Die Wetterdaten werden dann für die erfasste Position von einer externen Einheit bereitgestellt, etwa über eine datentechnische Verbindung von einer Online-Datenbank oder über direkte Kommunikation mit einem anderen Fahrzeug oder einer Infrastruktureinrichtung. Alternativ oder zusätzlich können über Funk verbreitete Wetterdaten empfangen werden.

Die datentechnische Verbindung zwischen dem Ego-Fahrzeug und einer externen Einheit, insbesondere einem externen Server, kann insbesondere drahtlos erfolgen, beispielsweise durch ein lokales Netzwerk oder ein größeres Netzwerk, beispielsweise das Internet. Ferner kann die Verbindung über ein Telekommunikationsnetz, etwa ein Telefonnetz, oder ein drahtloses lokales Netzwerk (WLAN) hergestellt werden. Ferner kann die Datenverbindung durch den Anschluss eines Datenkabels erfolgen. Die Verbindung kann auch über eine andere Einheit hergestellt werden, die selbst eine Verbindung zu dem externen Server herstellen kann. Beispielsweise kann eine datentechnische Verbindung zwischen dem Ego-Fahrzeug und einem mit dem Internet verbundenen Mobiltelefon bestehen, etwa durch ein Datenkabel oder eine Funkverbindung, beispielsweise per Bluetooth. Insbesondere kann die Verbindung zu dem externen Server über das Internet hergestellt werden.

Es können Verfahren aus dem Bereich der Kommunikation zwischen Fahrzeugen und anderen Einrichtungen (Car2X) verwendet werden. Beispielsweise kann eine Kommunikation zu einer Infrastruktureinrichtung (*Car2Infrastructure*) oder einem weiteren Fahrzeug (*Car2Car*) erfolgen.

Eine Voraussetzung für die Erfassung der Wetterdaten auf diese Weise ist insbesondere, dass die Position des Ego-Fahrzeugs bestimmt wird, sodass die für diese Position relevanten Wetterdaten empfangen werden können. Die Bestimmung der Position erfolgt auf an sich bekannte Weise, etwa mittels eines globalen Navigationssatellitensystems wie GPS.

Bei dem erfindungsgemäßen Verfahren wird eine Fahrerinformationsanzeige erzeugt und ausgegeben. Eine solche Anzeige kann auf unterschiedliche Weisen ausgebildet sein und kann an sich bekannte Elemente umfassen. Die Erzeugung und Ausgabe der Anzeige erfolgen insbesondere auf an sich bekannte Weise mittels hierzu eingerichteter Rechenvorrichtungen und Anzeigevorrichtungen. Die durch die Fahrerinformationsanzeige ausgegebene Anzeige umfasst Ausgaben, die für das Steuern des Fahrzeugs und seinen Fahrbetrieb von Relevanz sind. Dies sind insbesondere Bewegungsdaten oder Zustände von Einrichtungen des Fahrzeugs sowie gegebenenfalls Informations- und Warnausgaben von Fahrerinformationssystemen.

Die Anzeige kann mittels bekannter Anzeigeeinheiten ausgegeben werden, etwa mittels eines Displays, insbesondere an einer Mittelkonsole des Ego-Fahrzeugs oder in einem Kombiinstrument. Ferner kann eine Ausgabe mittels einer Sichtfeldanzeige so erfolgen, dass zumindest ein Teil der Fahrerinformationsanzeige so in ein Auge des Nutzers projiziert wird, dass die Anzeige der optischen Wahrnehmung der physischen Umgebung überlagert erscheint. Insbesondere können dabei Verfahren und Vorrichtungen aus dem Bereich der "erweiterten Realität" (englisch: *augmented reality)* verwendet werden. Bekannte Sichtfeldanzeigen, etwa Head-up-Displays, nutzen beispielsweise die Windschutzscheibe eines Fahrzeugs oder eine Brille zur Projektion.

Die ausgegebene Anzeige umfasst insbesondere keine Ausgabe eines Videobildes, das durch eine Kamera des Ego-Fahrzeugs erfasst wird. Stattdessen werden die ausgegebenen Anzeigedaten von einer Recheneinheit erzeugt, gegebenenfalls anhand von Videodaten einer Kamera, und die ausgegebenen grafischen Objekte sind gegenüber realen Objekten schematisch oder vereinfacht dargestellt.

Die Fahrerinformationsanzeige kann ferner Bedienobjekte oder Bedienelemente umfassen, insbesondere nach Art einer grafischen Bedienoberfläche. Derartige Objekte können beispielsweise einstellbare Parameter oder aktivierbare und deaktivierbare Funktionen repräsentieren. Sie sind insbesondere auswählbar und/oder betätigbar gebildet sein, wobei Nutzereingaben auf an sich bekannte Weise erfasst und mit Bezug zu dem jeweiligen Objekt ausgewertet werden.

Das grafische Fahrspurobjekt weist bei der Erfindung ferner einen Darstellungsparameter auf, beispielsweise eine Farbe, Schraffur, Textur oder Hintergrundabbildung im Bereich des Fahrspurobjekts. Alternativ oder zusätzlich kann ein Randbereich des Fahrspurobjekts, etwa eine dargestellte Fahrbahnmarkierung, auf bestimmte Weise dargestellt werden, etwa in einer bestimmten Farbe.

Beispielsweise wird erfasst, dass die Oberfläche des vor dem Ego-Fahrzeug liegenden Fahrbahnabschnitts nass ist oder dass Regen aktuell fällt oder in der näheren Vergangenheit gefallen ist. Der Darstellungsparameter wird dann so gebildet, dass das Fahrspurobjekt eine nasse Fahrbahn darstellt. Analog dazu kann eine grafische Darstellung einer verschneiten oder vereisten Fahrbahn erzeugt werden. Die Darstellung kann auch eine bestimmte Einfärbung oder Musterung aufweisen, etwa eine Schraffur. Zudem können bestimmte optische Merkmale anhand virtueller Objekte in der Anzeige dargestellt werden, etwa eine Spiegelung eines Objekts auf der Oberfläche des angezeigten Fahrspurobjekts oder Gischt bei einer Darstellung eines Fahrzeugs auf einer nassen Fahrbahn.

Die Fahrerinformationsanzeige umfasst insbesondere keine Darstellung von Bilddaten, die von einer Kamera erfasst werden. Stattdessen werden die Ausprägungen der dargestellten Objekte durch eine Recheneinheit erzeugt.

Entsprechend der Erfindung werden ein Fahrbahnverlauf des Fahrbahnabschnitts und ein Krümmungsradius einer Kurve des Fahrbahnverlaufs bestimmt. Es werden Bewegungsdaten des Ego-Fahrzeugs erfasst und anhand der erfassten Bewegungsdaten und des bestimmten Krümmungsradius' wird eine Kritikalität bestimmt. Das grafische Fahrspurobjekt weist ein Hervorhebungsmerkmal auf, das in Abhängigkeit von der bestimmten Kritikalität gebildet wird.

Der Fahrer kann dadurch vorteilhafterweise schnell erkennen, wenn er in die Steuerung des Ego-Fahrzeugs eingreifen muss, um eine sichere Kurvenfahrt zu gewährleisten.

Der erfasste Fahrbahnverlauf umfasst insbesondere Informationen darüber, ob und in welchem Maße ein von dem Ego-Fahrzeug befahrener Fahrweg eine seitliche Krümmung aufweist. Die erfassten Daten können auch weitere Eigenschaften der Fahrbahn betreffen, etwa eine Neigung der Fahrbahn in eine Richtung längs oder quer zur Fahrtrichtung des Ego-Fahrzeugs. Insbesondere umfassen die über den Fahrbahnverlauf erfassten Daten Informationen zur geometrischen Beschaffenheit der Fahrbahn. Das Ego-Fahrzeug fährt beispielsweise auf einer Straße, die mehrere Fahrspuren aufweisen kann. Typischerweise folgt das Ego-Fahrzeug bei seiner Fahrt dem Verlauf einer der Fahrspuren, wobei gegebenenfalls ein Spurwechsel zu einer anderen Fahrspur vorgenommen werden kann. Die Erfassung des Fahrbahnverlaufs kann den Verlauf der aktuell genutzten Fahrspur oder mehrerer Fahrspuren umfassen.

Die erfassten Bewegungsdaten des Ego-Fahrzeugs umfassen seine aktuelle Geschwindigkeit oder eine prognostizierte Geschwindigkeit beim Einfahren in die Kurve. Die Ausgabe kann dadurch vorteilhafterweise besonders genau an den tatsächlichen Bedarf angepasst werden.

Die aktuelle Geschwindigkeit des Ego-Fahrzeugs kann auf an sich bekannte Weise mittels Sensoren des Ego-Fahrzeugs erfasst werden. Ferner kann bestimmt werden, etwa mittels eines Fahrerassistenzsystems, welche Geschwindigkeit das Ego-Fahrzeug beim Erreichen einer bestimmten Position und insbesondere bei Einfahren in die Kurve haben wird. Wird zum Beispiel das Ego-Fahrzeug zum aktuellen Zeitpunkt bereits abgebremst, so wird bestimmt, mit welcher Geschwindigkeit das Ego-Fahrzeug voraussichtlich den Beginn der Kurve erreichen wird. Eine Bremsung kann dabei beispielsweise durch aktiven Einsatz einer Bremsvorrichtung erfolgen oder das Ego-Fahrzeug kann bereits dadurch verzögern, dass der Fahrer den Gashebel loslässt oder das Ego-Fahrzeug ausrollen lässt.

Es können ferner andere Bewegungsdaten erfasst werden, beispielsweise eine Beschleunigung in einer Richtung längs und/oder quer zur Fahrtrichtung.

Zudem können weitere Fahrzeugparameter erfasst und die Kritikalität ferner anhand der weiteren Fahrzeugparameter bestimmt werden. Indem auch Daten über die Bewegungsdaten des Ego-Fahrzeugs hinaus berücksichtigt werden, kann die Kritikalität somit besonders genau bewertet werden.

Neben den Bewegungsdaten des Ego-Fahrzeugs, das heißt insbesondere der Geschwindigkeit, können auch weitere Daten darüber werden, die das sichere Durchfahren der Kurve und insbesondere den Kraftschluss zwischen den Reifen des Ego-Fahrzeugs und der Fahrbahnoberfläche beeinflussen. Hierzu gehören beispielsweise Daten über den Typ, die Beschaffenheit, den Zustand und das Alter der Reifen des Fahrzeugs oder Fahrwerkseinstellungen.

Die bestimmte Kritikalität gibt insbesondere quantitativ an, mit welcher Dringlichkeit ein manueller Eingriff des Fahrers erforderlich ist, um eine sichere Fahrt zu gewährleisten. Beispielsweise kann es erforderlich sein, die Geschwindigkeit des Ego-Fahrzeugs manuell anzupassen und/oder ein bestimmtes Lenkmoment manuell aufzubringen. Dabei wird insbesondere ein physikalisches Modell verwendet, um zu bestimmen, ob bei einer Geschwindigkeit und dem bestimmten Krümmungsradius der Kurve Fliehkräfte auftreten, die zu einem Verlassen der Fahrspur beziehungsweise der geplanten Trajektorie führen würden. Dabei werden insbesondere zusätzliche Parameter beachtet, die sich beispielsweise auf die Kraftübertragung zwischen der Fahrbahn und dem Fahrzeug auswirken.

Zudem kann berücksichtigt werden, dass Normen und Vorschriften für Fahrerassistenzsysteme im Bereich der Quersteuerung Grenzwerte für das maximal automatisch aufzubringende Lenkmoment vorsehen. Das heißt, wenn der Radius einer Kurve und die Geschwindigkeit des Ego-Fahrzeugs dies erfordern, dann muss der Fahrer manuell ein zusätzliches Lenkmoment aufbringen, um insgesamt ein Lenkmoment über dem Schwellenwert zu erreichen. Die Kritikalität hängt daher insbesondere von dem Lenkmoment ab, das aufgebracht werden muss, um die Kurve mit der aktuellen Geschwindigkeit des Ego-Fahrzeugs sicher zu durchfahren. Dieses kann anhand eines physikalischen Modells in Abhängigkeit von dem Krümmungsradius der Kurve und der Geschwindigkeit sowie gegebenenfalls weiteren Parameter berechnet werden.

Die Kritikalität kann ferner von der Art der einzuleitenden Maßnahmen abhängen. Beispielsweise kann ein erster Wert der Kritikalität bestimmt werden, wenn eine Verzögerung des Fahrzeugs eingeleitet werden muss, um die Kurve mit einem unveränderten Grad an Unterstützung durch ein Fahrerassistenzsystem befahren zu können. Ein zweiter Wert der Kritikalität kann bestimmt werden, wenn ein Lenkeingriff erforderlich ist. Ferner kann ein dritter Wert der Kritikalität bestimmt werden, wenn sowohl eine Verzögerung als auch ein Lenkeingriff manuell erfolgen müssen, um die Kurve sicher zu durchfahren.

Bei einer Ausbildung des erfindungsgemäßen Verfahrens wird eine Position des Ego-Fahrzeugs bestimmt und der Fahrbahnverlauf wird in Abhängigkeit von der Position mittels Kartendaten erfasst. Dadurch kann vorteilhafterweise auch der Krümmungsradius besonders einfach bestimmt werden. Insbesondere können die Kartendaten bereits Informationen über den Krümmungsradius der Kurve umfassen.

Die Position wird dabei auf an sich bekannte Weise erfasst, beispielsweise mittels eines Navigationssatellitensystems, etwa GPS. Auch die Kartendaten werden auf an sich bekannte Weise bereitgestellt, etwa von einer Speichereinheit eines Navigationssystems des Ego-Fahrzeugs oder von einer externen Einheit, zu der zumindest eine zeitweise datentechnische Verbindung besteht.

Bei einer weiteren Ausbildung wird der Fahrbahnverlauf mittels eines Sensors des Ego-Fahrzeugs detektiert. Dadurch wird vorteilhafterweise sichergestellt, dass die Fahrerinformationsanzeige anhand des korrekten Krümmungsradius' erzeugt wird.

Es können an sich bekannte Sensoren verwendet werden, etwa eine Kamera, ein Lidarsensor oder ein Radarsensor. Aus den durch eigene Sensoren detektierten Daten kann dann ein tatsächlicher Krümmungsradius bestimmt werden. Die Sensoren des Ego-Fahrzeugs weisen jeweils einen Erfassungsbereich auf. Beispielsweise kann ein Radarsensor Daten in einem bestimmten räumlichen Winkel und bis zu einer bestimmten Entfernung vom Ego-Fahrzeug erfassen. Die Sensoren können dabei in Fahrtrichtung, gegen die Fahrtrichtung oder zur Seite hin gerichtet sein und in entsprechend angeordneten Erfassungsbereichen Daten erfassen.

Im Gegensatz hierzu steht ein lediglich anhand von Kartendaten bestimmter Krümmungsradius, der von der Genauigkeit und Korrektheit der Kartendaten abhängt. Abweichungen können jedoch insbesondere dann auftreten, wenn eine Verkehrsführung geändert wird, etwa bei einer Baustelle, wenn ein Hindernis ein Ausweichen erforderlich macht oder wenn eine Kurve mit verschiedenen Radien durchfahren werden kann. Insbesondere kann der detektierte Fahrbahnverlauf mit anhand von Kartendaten bestimmten Daten fusioniert werden, beispielsweise um die Daten an Positionen zu ergänzen, in denen eine Erfassung durch fahrzeugeigene Sensoren nicht möglich ist, oder um die Plausibilität der Daten zu überprüfen.

Das grafische Fahrspurobjekt, das erfindungsgemäß von der Fahrerinformationsanzeige umfasst ist, ist so gebildet, dass es dem Nutzer beziehungsweise dem Fahrer des Ego-Fahrzeugs erlaubt, grafische Elemente der Fahrerinformationsanzeige in einen räumlichen Bezug zu der tatsächlich vor dem Ego-Fahrzeug liegenden Fahrbahn zu bringen. Das Fahrspurobjekt kann dabei die aktuell vom Ego-Fahrzeug verwendete Fahrspur betreffen. Es kann ferner eine Fahrspur betreffen, auf der das Ego-Fahrzeug voraussichtlich die Kurve durchfahren wird, insbesondere wenn vor dem Einfahren in die Kurve noch ein Spurwechsel durchgeführt werden soll. Das Fahrspurobjekt kann ferner mehrere Fahrspuren umfassen, insbesondere die aktuell vom Ego-Fahrzeug befahrene Fahrspur und zumindest eine räumlich benachbarte Fahrspur, insbesondere eine benachbarte Fahrspur für die gleiche Fahrtrichtung.

Das grafische Fahrspurobjekt repräsentiert den tatsächlichen Fahrbahnverlauf insbesondere so, dass der Nutzer eine virtuelle Position innerhalb der Fahrerinformationsanzeige einem physischen Ort auf der vor dem Ego-Fahrzeug befindlichen Fahrbahn zuordnen kann. Die Darstellung des Fahrspurobjekts kann dabei gegenüber der Realität in ihrem Detailgehalt reduziert oder schematisch ausgebildet sein. Insbesondere kann die Ansicht der physischen Fahrbahn aus der Perspektive des Fahrers des Ego-Fahrzeugs durch eine Projektion und Transformation mathematisch auf das grafisches Fahrspurobjekt abgebildet werden. Beispielsweise kann dabei die Abbildung auf ein als gerades Fahrbahnstück ausgebildetes Fahrspurobjekt erfolgen oder es kann ein Fahrspurobjekt mit einer bestimmten vorgegebenen Krümmung vorgesehen sein, auf welches der reale Fahrspurverlauf abgebildet wird.

Bei einer weiteren Ausbildung wird das grafische Fahrspurobjekt so gebildet, dass es einer perspektivischen Darstellung des Fahrbahnverlaufs entspricht und einen Krümmungsradius so umfasst, dass ein tatsächlicher Krümmungsradius der Kurve ausgegeben wird.

Das grafische Fahrspurobjekt umfasst dabei insbesondere eine perspektivische Ansicht einer gekrümmten Fahrbahn, wobei die Krümmung des grafischen Fahrspurobjekts im Wesentlichen dem für den physischen Fahrbahnverlauf erfassten Krümmungsradius entspricht. Der tatsächliche Fahrbahnverlauf wird so besonders realistisch durch das grafische Fahrspurobjekt repräsentiert. Das Fahrspurobjekt wird dabei insbesondere aus einer Perspektive gebildet, die einer Ansicht von einer virtuellen Position knapp oberhalb des Ego-Fahrzeugs entspricht.

Das Hervorhebungsmerkmal des grafischen Fahrspurobjekts zum Hervorheben eines Kurvenbereichs ist auf an sich bekannte Weise ausgebildet und kann eine hervorhebende Darstellung beispielsweise mittels Farbe, Helligkeit, Kontrast, Transparenz, Sättigung oder Form umfassen, wodurch die Aufmerksamkeit eines Nutzers auf ein bestimmtes Objekt gelenkt wird. Farben zur Hervorhebung, die typischerweise auch zum Ausgeben von Warnungen verwendet werden, können etwa Rot, Gelb und Grün sein. Im Unterschied dazu können bestimmte farbliche Darstellungen eine geringere Hervorhebung bewirken, etwa bei einer grauen, dunklen oder weniger stark gesättigten Farbgebung. Ferner kann eine Hervorhebung mittels einer zeitlich veränderlichen Darstellung des Fahrspurobjekts erfolgen, insbesondere durch eine periodische Veränderung der Darstellung, etwa durch Blinken oder Pulsieren, oder durch plötzliches Auftauchen oder Verschwinden. Eine zeitliche Veränderung der Darstellung kann sich auch auf eine Formgebung oder eine einmalige oder periodisch dargestellte Größenänderung des dargestellten grafischen Objekts beziehen. Das Hervorhebungsmerkmal kann auch als weiteres grafisches Objekt ausgebildet sein, etwa ein Rahmen oder eine Umrandung des Fahrspurobjekts.

Die Ausprägung des Hervorhebungsmerkmals hängt von der bestimmten Kritikalität ab. Beispielsweise kann bei einer niedrigeren Kritikalität das Hervorhebungsmerkmal so ausgebildet sein, dass es eine schwache Hervorhebung bewirkt, etwa eine Darstellung des Fahrspurobjekts ohne eine Umrandung, oder eine farbige Gestaltung, die umgebenden grafischen Objekten etwa in Helligkeit, Farbe und Kontrast ähnlich ausgebildet ist. Bei einer höheren Kritikalität kann eine Umrandung oder ein zusätzlich hervorhebendes Objekt angezeigt werden oder die Darstellung des Fahrspurobjekts kann zur Hervorhebung abweichend von umgebenden grafischen Objekten erfolgen, etwa durch eine kontrastreiche Darstellung in Helligkeit und/oder Farbe oder durch die Verwendung einer Signalfarbe wie Gelb oder Rot.

Bei einer Weiterbildung wird ein aktueller Tageslichtzustand erfasst und die Fahrerinformationsanzeige umfasst ferner ein Tageslichtobjekt, das in Abhängigkeit von dem erfassten Tageslichtzustand gebildet wird. Der Fahrer kann daher die Umgebungsbedingungen besonders umfassend anhand der Anzeige erfassen.

Auch der Tageslichtzustand kann auf an sich bekannte Weise erfasst werden, etwa mittels Sensoren des Fahrzeugs, wie einer Kamera oder einem Lichtsensor, oder durch Empfangen von Daten von einer externen Einheit. Ferner kann eine aktuelle Uhrzeit und gegebenenfalls ein Datum erfasst werden, um den Tageslichtzustand zu bestimmen. Dabei wird insbesondere die Position des Fahrzeugs, insbesondere der Breitengrad, berücksichtigt.

Das Tageslichtobjekt umfasst insbesondere eine Darstellung eines Mondes oder einer Sonne. Ferner können auch Sterne dargestellt werden. Das Tageslichtobjekt kann in der Fahrerinformationsanzeige an einer Position angeordnet sein, die einem virtuellen Horizont über dem grafischen Fahrspurobjekt entspricht.

Bei dem Verfahren kann ferner bewertet werden, ob ein Spurwechsel auf eine benachbarte Fahrspur sicher durchführbar ist. In Abhängigkeit hiervon kann ein grafisches Darstellungsmerkmal eines Fahrspurobjekts in der Anzeige gebildet werden. Der Fahrer kann dadurch vorteilhafterweise leicht erkennen, ob er einen Spurwechsel auf eine bestimmte Fahrspur sicher durchführen kann.

Ein Fahrspurwechsel ist dann sicher, wenn keine Kollisionsgefahr mit einem weiteren Verkehrsteilnehmer oder einem anderen Objekt besteht; gegebenenfalls können rechtliche Einschränkungen wie Überholverbote oder Spurwechselverbote berücksichtigt werden. Mittels der Sensoren werden Objekte und weitere Verkehrsteilnehmer in einer Umgebung des Ego-Fahrzeugs erfasst. Von Relevanz sind besonders Verkehrsteilnehmer auf derjenigen benachbarten Fahrspur, für die ein Spurwechsel bewertet werden soll.

Es wird erfasst, ob sich ein anderer Verkehrsteilnehmer aktuell in einem Bereich der benachbarten Fahrspur befindet, den das Ego-Fahrzeug bei einem Spurwechsel befahren würde. Ferner wird erfasst, ob sich ein anderer Verkehrsteilnehmer zu einem zukünftigen Zeitpunkt in einem solchen Bereich befinden wird, wenn das Ego-Fahrzeug diesen Bereich befahren würde, wenn es einen Spurwechsel vornehmen würde. Dies kann andere Verkehrsteilnehmer betreffen, die aktuell neben dem Ego-Fahrzeug fahren, die sich mit höherer Geschwindigkeit von hinten nähern oder die mit geringerer Geschwindigkeit in Fahrtrichtung vor dem Ego-Fahrzeug fahren. Ferner kann auch eine Beschleunigung eines weiteren Verkehrsteilnehmers erfasst und berücksichtigt werden.

Alternativ oder zusätzlich kann die Sicherheit eines Spurwechsels auf andere Weise bestimmt werden. Dabei können ferner andere Umfelddaten erfasst werden und es können verschiedene Merkmale anhand der Umfelddaten bestimmt werden.

Bei einer Weiterbildung des Verfahrens betrifft das grafische Darstellungsmerkmal des Nachbar-Spurobjekts eine Helligkeit, Farbe, Transparenz, einen Kontrast oder ein Muster. Der Fahrer kann so vorteilhafterweise besonders einfach, insbesondere durch die Darstellung eines flächigen grafischen Objekts, erkennen, ob ein sicherer Spurwechsel möglich ist.

Alternativ oder zusätzlich können andere, an sich bekannte Weisen der grafischen Darstellung und insbesondere der Hervorhebung bestimmter Objekte in einer grafischen Darstellung genutzt werden. Beispielsweise können auch dynamische Darstellungsweisen verwendet werden, etwa indem sich ein Parameter der Darstellung periodisch ändert, wie beispielsweise durch Änderung der Helligkeit bei Blinken oder Pulsieren oder durch einen periodischen Farbwechsel.

Bei einer Ausbildung umfasst die Fahrerinformationsanzeige ferner ein grafisches Verkehrsschild-Objekt, wobei das Verkehrsschildobjekt insbesondere auf dem Fahrspurobjekt oder an seinem Rand angeordnet ist. Dadurch können dem Fahrer empfohlene Maßnahmen vorteilhafterweise besonders klar verdeutlicht werden.

Das Verkehrsschild-Objekt kann beispielsweise so angezeigt werden, dass es nach Art einer auf die Fahrbahnoberfläche aufgebrachten Markierung auf dem grafischen Fahrspurobjekt erscheint. Es kann ferner als virtuelles, neben oder über der Fahrspur angeordnetes Verkehrsschild in der Fahrerinformationsanzeige dargestellt werden.

Das dargestellte Verkehrsschild-Objekt kann gemäß einem physischen Verkehrsschild ausgebildet sein, das in der Umgebung der befahrenen Fahrbahn oder der Kurve detektiert wird, wenn etwa ein Warnzeichen, eine Geschwindigkeitsbegrenzung und/oder ein Überholverbot erkannt wurde. Das Verkehrsschild-Objekt kann ferner eine Fahrempfehlung eines Fahrerassistenzsystems wiedergeben, etwa um dem Fahrer zu empfehlen, das Fahrzeug auf eine bestimmte Geschwindigkeit abzubremsen.

Das erfindungsgemäße Fahrerinformationssystem umfasst die Merkmale des Anspruchs 8.

Das erfindungsgemäße Fahrerinformationssystem ist insbesondere ausgebildet, das vorstehend beschriebene erfindungsgemäße Verfahren zu implementieren. Das Fahrerinformationssystem weist somit dieselben Vorteile auf wie das erfindungsgemäße Verfahren.

Bei einer Ausbildung des erfindungsgemäßen Fahrerinformationssystems umfasst die Anzeigeeinheit eine Blickfeldanzeige zum Ausgeben der Fahrerinformationsanzeige. Die Anzeige kann so vorteilhafterweise besonders leicht vom Fahrer erfasst werden. Sie kann ferner besonders gut in Bezug zur physischen Umgebung des Ego-Fahrzeugs gesetzt werden.

Insbesondere kann ein Head-up-Display oder eine an sich bekannte Anzeigeeinrichtung aus dem Bereich der sogenannten "erweiterten Realität" (englisch: *augmented reality)* verwendet werden. Beispielsweise sind Brillen bekannt, die eine grafische Darstellung so ins Auge eines Nutzers projizieren, dass die grafische Darstellung der natürlichen Wahrnehmung des Auges überlagert erscheint. Auf diese Weise können Zusatzinformationen besonders leicht erfassbar ausgegeben werden.

Die Erfindung wird nun anhand von Ausführungsbeispielen mit Bezug zu den Zeichnungen erläutert.
- Figur 1: zeigt ein Fahrzeug mit einem Ausführungsbeispiel des erfindungsgemäßen Fahrerinformationssystems,
- Figur 2: zeigt eine Verkehrssituation mit Fahrzeugen auf einer Fahrbahn,
- Figur 3: zeigt ein Ausführungsbeispiel einer anhand des Verfahrens erzeugten Fahrerinformationsanzeige bei einer Kurvenfahrt,
- Figuren 4A bis 4C: zeigen weitere Ausführungsbeispiele von anhand des Verfahrens erzeugten Fahrerinformationsanzeigen unter Berücksichtigung von Wetterdaten,
- Figuren 5A bis 5D: zeigen weitere Ausführungsbeispiele von anhand des Verfahrens erzeugten Fahrerinformationsanzeigen unter Berücksichtigung verschiedener Arten von Fahrbahnmarkierungen,
- Figuren 6A bis 6C: zeigen weitere Ausführungsbeispiele von anhand des Verfahrens erzeugten Fahrerinformationsanzeigen für einen geplanten Spurwechsel und
- Figuren 7A bis 7C: zeigen weitere Ausführungsbeispiele von anhand des Verfahrens erzeugten Fahrerinformationsanzeigen unter Berücksichtigung gegebenenfalls drohenden Gegenverkehrs.

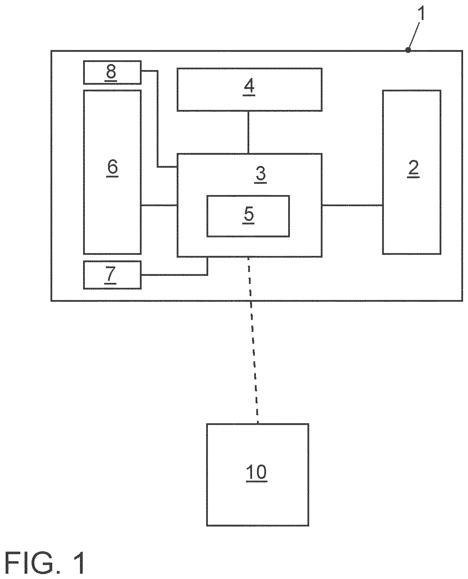

Mit Bezug zu Figur 1 wird ein Fahrzeug mit einem Ausführungsbeispiel des erfindungsgemäßen Fahrerinformationssystems erläutert.

Ein Ego-Fahrzeug 1 umfasst eine Erfassungseinheit 2, die mit einer Steuereinheit 3 gekoppelt ist. Es umfasst ferner eine Anzeigeeinheit 4 und ein Fahrerassistenzsystem 6, die ebenfalls mit der Steuereinheit 3 gekoppelt sind. Die Steuereinheit 3 umfasst bei dem Ausführungsbeispiel eine Auswertungseinheit 5 und ist datentechnisch drahtlos mit einer externen Einheit 10, bei dem Ausführungsbeispiel ein externer Server 10, gekoppelt. Das Ego-Fahrzeug 1 umfasst ferner eine Beleuchtungseinrichtung 7 sowie eine Anhängevorrichtung 8, die ebenfalls mit der Steuereinheit 3 gekoppelt sind.

Die Erfassungseinheit 2 ist bei dem Ausführungsbeispiel auf an sich bekannte Weise ausgebildet und umfasst eine Kamera, die Bilddaten in einem Erfassungsbereich erfasst, der sich von dem Ego-Fahrzeug 1 aus mit einem bestimmten Winkel in Fahrtrichtung nach vorne erstreckt. Sie umfasst ferner vordere, seitliche und hintere Radarsensoren, die Daten in weiteren Erfassungsbereichen um das Ego-Fahrzeug 1 herum erfassen.

Die Anzeigeeinheit 4 ist ebenfalls auf an sich bekannte Weise ausgebildet und bei dem Ausführungsbeispiel als Display in ein Kombiinstrument des Ego-Fahrzeugs 1 integriert. Bei weiteren Ausführungsbeispielen umfasst die Anzeigeeinheit 4 ein Head-up-Display, das so eingerichtet ist, dass eine Anzeige so in das Blickfeld eines Fahrers des Ego-Fahrzeugs 1 projiziert wird, dass die Anzeige der natürlichen Wahrnehmung des Fahrers überlagert wird. Bei weiteren Ausführungsbeispielen sind ferner weitere Einrichtungen zur Ausgabe von Anzeigen vorgesehen, wie sie beispielsweise aus dem Bereich der erweiterten Realität bekannt sind. Alternativ oder zusätzlich kann die Anzeigeeinheit 4 ein Mitteldisplay im Bereich einer Mittelkonsole des Ego-Fahrzeugs 1 oder ein anderes Display im Ego-Fahrzeug 1 umfassen. Zudem kann die Anzeigeeinheit 4 mehrere Displays umfassen.

Das Fahrerassistenzsystem 6 umfasst mehrere Fahrerassistenzmodule, durch die der Fahrer des Ego-Fahrzeugs 1 auf unterschiedliche Weise beim Steuern des Ego-Fahrzeugs 1 unterstützt wird. Diese sind bei dem Ausführungsbeispiel nicht näher spezifiziert. Vorgesehen sind etwa Systeme zur Unterstützung der Längssteuerung, insbesondere ein Assistent zum Halten eines vorgegebenen Abstands zu einem vorausfahrenden Fahrzeug sowie zum Halten einer vorgegebenen Geschwindigkeit, sowie zur Unterstützung der Quersteuerung, insbesondere ein Assistent zum Halten einer befahrenen Fahrspur, etwa anhand von Fahrbahnmarkierungen oder durch eine Folgefahrt hinter einem vorausfahrenden Fahrzeug. Durch das Fahrerassistenzsystem 6 können Ausgaben erzeugt und beispielsweise mittels der Anzeigeeinheit 4 ausgegeben werden, insbesondere um dem Fahrer Warnhinweise oder empfohlene Fahrmanöver anzuzeigen. Ferner können verschiedene Fahrerassistenzmodule aktiv in Steuerungsvorrichtungen des Ego-Fahrzeugs 1 eingreifen.

Die Beleuchtungseinrichtung 7 umfasst verschiedene Einrichtungen, die einer von außerhalb des Ego-Fahrzeugs 1 erfassbaren Beleuchtung dienen. Bei dem Ausführungsbeispielen sind Scheinwerfer zum Erzeugen eines Tagfahrlichts, eines Abblendlichts, eines Fernlichts und eines Standlichts umfasst. Ferner sind Fahrtrichtungsanzeiger sowie Seitenmarkierungsleuchten und weitere Signalleuchten umfasst. Es sind ferner Schlussleuchten, Bremsleuchten, Rückstrahler, Nebelschlussleuchten und Rückfahrscheinwerfer umfasst, die insbesondere am Heck des Ego-Fahrzeugs 1 so angeordnet sind, dass sie für den von hinten ankommenden Verkehr sichtbar sind.

Die Anhängevorrichtung 8 ist auf an sich bekannte Weise ausgebildet und umfasst Elemente, die zur Koppelung mit einer angehängten Vorrichtung geeignet sind. Dies kann insbesondere ein Anhänger sein. Hierzu sind auch elektrische Anschlüsse vorgesehen, durch die beispielsweise eine Beleuchtungsanlage eines Anhängers angesteuert werden kann. Die Anhängevorrichtung umfasst bei dem Ausführungsbeispiel ferner Sensoren, die eine aufliegende Masse sowie gegebenenfalls eine Zugkraft eines Anhängers detektieren, beispielsweise um das Vorhandensein eines Anhängers sowie gegebenenfalls seinen Typ zu bestimmen.

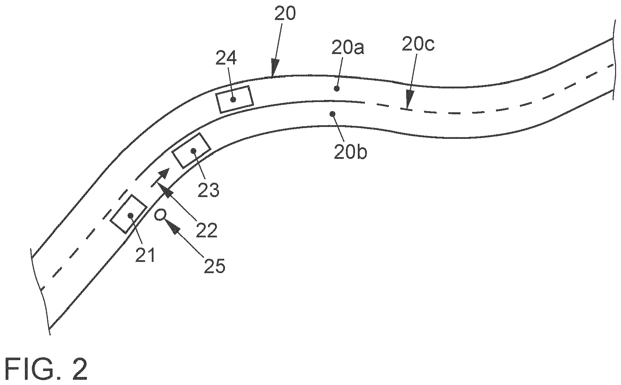

Mit Bezug zu Figur 2 wird ein Ausführungsbeispiel des Verfahrens erläutert. Dabei wird von dem oben mit Bezug zu Figur 1 erläuterten Ego-Fahrzeug mit einem Ausführungsbeispiel des erfindungsgemäßen Fahrerinformationssystems ausgegangen, welches durch die Beschreibung des Verfahrens weiter spezifiziert wird.

Ein Ego-Fahrzeug 21, das bei dem Ausführungsbeispiel dem in Figur 1 gezeigten Ego-Fahrzeug 1 entspricht, fährt in einer durch einen Pfeil 22 dargestellten Fahrtrichtung auf einer Fahrbahn 20, die zwei Fahrspuren 20a, 20b aufweist. Im Bereich der Fahrbahn 20 ist ein Verkehrsschild 25 angeordnet. Auf der gleichen Fahrspur 20b wie das Ego-Fahrzeug 21 befindet sich ein vorausfahrendes Fahrzeug 23, während sich auf der benachbarten Fahrspur 20a ein entgegenkommendes Fahrzeug 24 befindet. Die Fahrbahn 20 weist einen Fahrbahnverlauf mit Kurven auf, wobei sich bei dem in Figur 2 gezeigten Ausführungsbeispiel das Ego-Fahrzeug 1 auf eine Rechtskurve zubewegt, an die sich eine Linkskurve anschließt.

Das Ego-Fahrzeug 21 erfasst mittels der Erfassungseinheit 2 den in Fahrtrichtung vor ihm liegenden Fahrbahnverlauf. Bei dem Ausführungsbeispiel werden hierzu mittels der von der Erfassungseinheit 2 umfassten Kamera Bilddaten erfasst und in einem weiteren Schritt ausgewertet, um den Fahrbahnverlauf zu bestimmen. Hierzu wird insbesondere die geometrische Konfiguration der Fahrbahn 20 beziehungsweise der aktuell vom Ego-Fahrzeug 1 befahrenen Fahrspur 20b bestimmt. Bei weiteren Ausführungsbeispielen sind alternativ oder zusätzlich andere Sensoren des Ego-Fahrzeugs 1 zur Erfassung vorgesehen.

Anhand der von der Erfassungseinheit 2 erfassten Daten werden auch die Fahrbahnmarkierungen, welche die beiden Fahrspuren 20a, 20b voneinander trennen, erfasst. Zudem werden weitere, in Figur 2 nicht dargestellte Fahrbahnmarkierungen an den Rändern der Fahrbahn 20 erfasst. Für die Fahrbahnmarkierungen werden Abgrenzungsmarkierungs-Klassen bestimmt, im vorliegenden Fall "gestrichelte Linie" und "durchgezogene Linie" für verschiedene Bereiche der Mittellinie zwischen den Fahrspuren 20a, 20b und "durchgezogene Linie" für die Randmarkierungen der Fahrbahn 20. Bei weiteren Ausführungsbeispielen kann auch eine Fahrbahnmarkierung der Abgrenzungsmarkierungs-Klasse "doppelte durchgezogene Linie", "parallele gestrichelte und durchgezogene Linie" oder eine ähnliche Konfiguration bestimmt werden. Auch ein Bordstein oder in Übergang von der Fahrbahn 20 zu einem daneben angeordneten Bankett kann als Abgrenzungsmarkierung erfasst und entsprechend klassifiziert werden.

Zusätzlich wird bei dem Ausführungsbeispiel die aktuelle Position des Ego-Fahrzeug 1 erfasst und anhand dieser Position werden Kartendaten bereitgestellt, die Informationen über den Fahrbahnverlauf umfassen. Es wird eine Fusion der Kartendaten sowie der erfassten Sensordaten durchgeführt und hieraus wird der tatsächlich in Fahrtrichtung vor dem Ego-Fahrzeug 1 liegenden Fahrbahnverlauf bestimmt.

Das Ego-Fahrzeug 21 erfasst mittels der Erfassungseinheit 2 zudem Wetterdaten. Bei dem Ausführungsbeispiel wird hierzu ein Regensensor verwendet sowie die Kamera. Bei weiteren Ausführungsbeispielen werden alternativ oder zusätzlich anhand der bestimmten Position des Ego-Fahrzeugs 21 relevante Wetterdaten von einer externen Einheit 10 abgerufen. Ferner können von einer Infrastruktur oder beispielsweise über Radiosender bereitgestellte Daten über das Wetter an der Position des Ego-Fahrzeugs 21 erfasst werden.

Die erfassten Wetterdaten umfassen Informationen über Regen und Schnee sowohl zum aktuellen Zeitpunkt als auch in der jüngeren Vergangenheit. Hieraus wird darauf geschlossen, ob der vor dem Ego-Fahrzeug 21 liegende Fahrbahnabschnitt nass ist oder Schneeglätte aufweist. Ferner betreffen die Wetterdaten die Gefahr einer Eisglätte. Insbesondere wird hierzu die aktuelle Temperatur der Luft oder der Fahrbahnoberfläche berücksichtigt; wenn die Temperatur unter dem Gefrierpunkt oder einem anderen Schwellenwert liegt, wird von einer vereisten Fahrbahn ausgegangen. Andere Arten von Niederschlag, etwa Hagel oder Graupel, werden ebenfalls berücksichtigt.

Ferner erfasst die Erfassungseinheit Bewegungsdaten des Ego-Fahrzeug 21, insbesondere seine aktuelle Geschwindigkeit und Beschleunigung. Bei weiteren Ausführungsbeispielen werden auch eine Geschwindigkeit und Beschleunigung des Ego-Fahrzeugs zu einem späteren Zeitpunkt prognostiziert, insbesondere für einen prognostizierten Zeitpunkt des Eintritts des Ego-Fahrzeugs 21 in eine Kurve. Bei weiteren Ausführungsbeispielen werden ferner weitere Daten über das Ego-Fahrzeug 21 erfasst, insbesondere über die Beschaffenheit seiner Reifen und Einstellungen seines Fahrwerks, die sich auf das Verhalten des Ego-Fahrzeugs bei einer Kurvenfahrt auswirken.

Die Auswertungseinheit 5 bestimmt auf der Grundlage des erfassten Fahrbahnverlaufs den Krümmungsradius der vor dem Ego-Fahrzeug 21 liegenden Kurve. Bei weiteren Ausführungsbeispielen können auch die Krümmungsradien weiterer Kurven bestimmt werden, insbesondere um eine weiter vorausschauende Fahrweise zu ermöglichen. Anschließend werden die Informationen über die Geschwindigkeit des Ego-Fahrzeugs 21 und den Krümmungsradius der vor dem Ego-Fahrzeug 21 liegenden Kurve verwendet, um einen Wert einer Kritikalität zu bestimmen.

Zum Bestimmen der Kritikalität wird das zum Durchfahren der Kurve bei der aktuellen oder prognostizierten Geschwindigkeit notwendige Lenkmoment für das Ego-Fahrzeug 21 bestimmt, insbesondere durch das Fahrerassistenzsystem 6. Das bestimmte Lenkmoment wird mit einem Schwellenwert verglichen, der bei dem Fahrerassistenzsystem 6 für ein maximales Lenkmoment zur automatischen Unterstützung beim Halten der Fahrspur 20b definiert ist. Wird dieser Schwellenwert überschritten, so kann das Fahrerassistenzsystem 6 nicht mit einem genügend großen Lenkmoment automatisch unterstützend eingreifen, um dem Ego-Fahrzeug 21 eine sicheres Durchfahren der Kurve zu ermöglichen. Das heißt, der Fahrer des Ego-Fahrzeugs 21 muss durch Aufbringen eines zusätzlichen Lenkmoment in die Steuerung des Ego-Fahrzeugs 21 eingreifen und/oder durch Verzögern des Ego-Fahrzeug 21 die Geschwindigkeit verringern.

Entsprechend der Erfindung wird bestimmt, ob das Ego-Fahrzeug 1 bei der erfassten oder prognostizierten Geschwindigkeit die Kurve physikalisch sicher durchfahren kann. Wenn bestimmt wird, dass dies nicht möglich oder mit Risiken verbunden ist, wird dies als höhere Kritikalität definiert. Dabei wird insbesondere die physikalische mögliche Kraftübertragung zwischen den Reifen des Ego-Fahrzeugs 1 und der Fahrbahnoberfläche berücksichtigt. Bei einer höheren Kritikalität ist beispielsweise ein Abbremsen des Ego-Fahrzeugs 1 oder eine Wahl eines größeren Kurvenradius' erforderlich.

Bei dem Ausführungsbeispiel können verschiedene Fahrerassistenzmodule des Fahrerassistenzsystems 6 aktiviert werden, wobei auch verschiedene Grade der Automatisierung erreicht werden. Der Fahrer kann beispielsweise eine niedrige Automatisierungsstufe wählen, bei der die Längs- und Quersteuerung des Ego-Fahrzeugs 1 im Wesentlichen manuell erfolgt. Er kann Module hinzuschalten, die Warnungen oder Empfehlungen für die Steuerung ausgeben; dies entspricht einer niedrigen Automatisierungsstufe. Des Weiteren kann er Module aktivieren, die einzelne Aufgaben der Längs- und Quersteuerung übernehmen; dies entspricht einer höheren Automatisierungsstufe. Ferner kann der Fahrer Fahrerassistenzmodule aktivieren, welche sowohl die Längssteuerung als auch die Quersteuerung automatisch unterstützen; dies entspricht einer noch höheren Automatisierungsstufen. Der Schwellenwert für das Lenkmoment, welches ein Fahrerassistenzmodul zur Quersteuerung aufbringen kann, kann von dem konkreten Modul oder dem Fahrerassistenzsystem 6 abhängen.

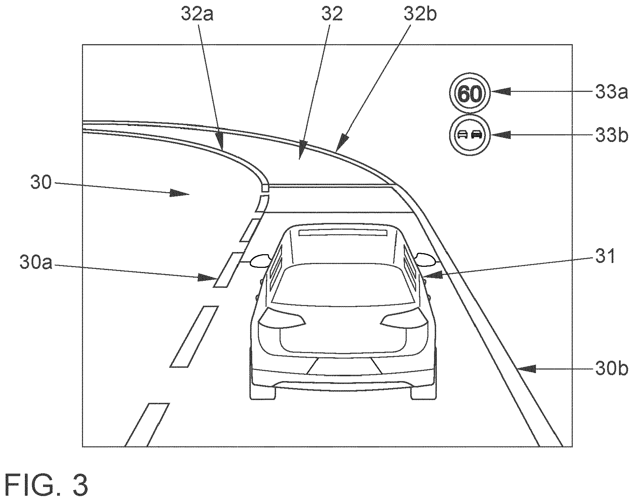

Während der Fahrt erzeugt die Steuereinheit 3 eine Fahrerinformationsanzeige, die durch die Anzeigeeinheit 4 ausgegeben wird. Ein Ausführungsbeispiel einer solchen Anzeige ist beispielhaft in Figur 3 gezeigt.

Die Fahrerinformationsanzeige umfasst ein Ego-Objekt 31, das als perspektivische Ansicht des Ego-Fahrzeugs 21 von hinten aus einer leicht erhöhten virtuellen Position so ausgebildet ist, dass ein vor dem Ego-Fahrzeug 21 liegender Bereich ebenfalls darstellbar ist. Die Anzeige umfasst ferner ein Fahrspurobjekt 30, das so angeordnet ist, dass das Ego-Objekt 31 darauf angezeigt wird. Das Fahrspurobjekt 30 repräsentiert die aktuell tatsächlich vom Ego-Fahrzeug 21 befahrene Fahrspur 20b auf der Fahrbahn 20.

In weiteren Ausführungsbeispielen werden für weitere und insbesondere benachbarte Fahrspuren weitere grafische Objekte angezeigt, welche beispielsweise analog zu dem gezeigten Fahrspurobjekt 30 ausgebildet sind.

Bei dem Ausführungsbeispiel wird das Fahrspurobjekt 30 durch eine gestrichelte linke 30a und eine durchgezogene rechte Fahrbahnmarkierung 30b begrenzt. Die dargestellten Markierungstypen entsprechen den tatsächlich auf der Fahrspur 20a vorhandenen Markierungen gemäß den zuvor bestimmten Abgrenzungsmarkierungs-Klassen. Bei weiteren Ausführungsbeispielen können die Fahrbahnmarkierungen anhand anderer Kriterien gebildet werden, etwa um zu symbolisieren, ob ein Fahrspurwechsel in Richtung einer Fahrbahnmarkierung erlaubt und möglich ist.

Das Fahrspurobjekt 30 repräsentiert den erfassten Verlauf der physischen Fahrspur 20b, auf der sich das Ego-Fahrzeug 21 aktuell befindet. Eine vor dem Ego-Fahrzeug 21 befindliche Kurve wird durch einen Kurvenbereich 32 des Fahrspurobjekts 30 repräsentiert. Dieser ist in seiner geometrischen Form so gebildet, dass er den tatsächlichen Krümmungsradius der Kurve in der perspektivischen Darstellung wiedergibt.

Das Fahrspurobjekt 30 wird mit dem Kurvenbereich 32 in Abhängigkeit von der für die Kurve bestimmten Kritikalität gebildet. Bei dem Ausführungsbeispiel sind die Fahrbahnmarkierungen 32a, 32b, welche die dargestellte Fahrspur im Kurvenbereich 32 seitlich begrenzen, so ausgebildet, dass der Fahrer auf einen notwendigen manuellen Eingriff hingewiesen wird. Dies erfolgt hier durch Darstellung in einer bestimmten Farbe, etwa rot, wenn der Wert der bestimmten Kritikalität einen Schwellenwert überschreitet. Bei dem Ausführungsbeispiel werden die Fahrbahnmarkierungen 32a, 32b im Kurvenbereich 32 dann nicht mehr so gebildet, dass sie die tatsächlichen Markierungen auf der Fahrspur 20b wiedergeben, sondern sie werden durchgezogen dargestellt, um den Fahrer auf ihre Bedeutung in der Kurve hinzuweisen.

Bei weiteren Ausführungsbeispielen weist das Fahrspurobjekt 30 andere Hervorhebungsmerkmale als die Farbe der Fahrbahnmarkierungen 32a, 32b im Kurvenbereich 32 auf, etwa eine Farbe der Oberfläche der dargestellten Fahrspur 32, sodass die Hervorhebung großflächig erfolgt. Bei weiteren Ausführungsbeispielen können je nach dem Wert der Kritikalität andere Darstellungen erzeugt werden, etwa mit anderen Farben, die anhand des Kritikalitätswerts und einer Skala bestimmt werden. Ferner können dynamische Darstellungen erzeugt werden, etwa mit blinkenden Objekten.

Bei dem Ausführungsbeispiel umfasst die Fahrerinformationsanzeige ferner Darstellungen von Verkehrsschildern 33a, 33b, die eine Geschwindigkeitsbegrenzung und ein Überholverbot im Bereich der Kurve signalisieren. Diese Verkehrsschilder 33a, 33b können auch im Bereich des Fahrspurobjekts 30 so angezeigt werden, dass sie auf seiner Oberfläche erscheinen, oder sie können wie tatsächliche Verkehrsschilder 25 am Rand des Fahrspurobjekts 30 angezeigt werden. Die Verkehrsschilder 33a, 33b entsprechen bei dem Ausführungsbeispiel einem tatsächlich am Rand der Fahrbahn 20 angeordneten Verkehrsschild 25, bei weiteren Ausführungsbeispielen können jedoch auch Verkehrsschilder anhand von Fahrempfehlungen des Fahrerassistenzsystems 6 gebildet werden, etwa wenn eine bestimmte Höchstgeschwindigkeit für das sichere Durchfahren einer Kurve bestimmt wurde oder wenn der Bereich der Kurve als nicht sicher zum Überholen bewertet wird.

Bei weiteren Ausführungsbeispielen können in Abhängigkeit von der Kritikalität ferner akustisch und/oder haptisch erfassbare Warnmeldungen ausgegeben werden. Ferner können zusätzlich andere optische Warnmeldungen angezeigt werden, etwa mittels eines Warnsymbols.

Bei einem weiteren Ausführungsbeispiel ist das Fahrerassistenzsystem 6 dazu eingerichtet, zu bestimmen, ob beim Eintritt in die Kurve eine Geschwindigkeit erreicht wird, die ein sicheres Durchfahren der Kurve erlaubt. Wenn der Fahrer trotz der Hervorhebung des Kurvenabschnitts 32 der Fahrerinformationsanzeige keine geeigneten Maßnahmen einleitet, können automatisch Sicherheitsmaßnahmen eingeleitet werden, um das Ego-Fahrzeug 1, 21 in einen sicheren Zustand zu bringen. So kann etwa eine Bremsung durchgeführt werden, die das Ego-Fahrzeug 1, 21 auf eine sichere Geschwindigkeit bringt.

Bei dem Ausführungsbeispiel ist ferner vorgesehen, dass die grafische Darstellung des Ego-Fahrzeugs 31 in der Fahrerinformationsanzeige an einer festen Position angeordnet ist. Die Darstellung entspricht daher einer Perspektive von einem relativ zum Ego-Fahrzeug 21 festen Punkt, insbesondere von einer Position des Fahrers oder einer oberhalb des Ego-Fahrzeugs 21 angeordneten Position. Die Darstellung wird so erzeugt, dass bei der Fahrt eine Bewegung so dargestellt wird, dass sich andere Objekte, welche die Umgebung des Ego-Fahrzeugs 21 präsentieren, relativ zu dem dargestellten Ego-Objekt 31 bewegen. Beispielsweise dargestellt, dass sich die Fahrbahnmarkierungen 30A, 30B relativ zum Ego-Objekt 31 bewegen und dass sich auch die Anordnung des Fahrspurobjektes 30 relativ zum Ego-Objekt 31 verändert. Beispielsweise verändert sich das Fahrspurobjekt 30 während des Durchfahrens der Kurve so, dass seine Krümmung veränderlich dargestellt wird und das Fahrspurobjekt 30 etwa am Ausgang das kurvigen Bereichs wieder vollständig gerade beziehungsweise mit einem veränderten, erfassten Krümmungsradius verläuft.

Bei einem weiteren Ausführungsbeispiel werden andere Verkehrsteilnehmer erfasst und als Verkehrsteilnehmer-Objekte in der Fahrerinformationsanzeige ausgegeben. Die Verkehrsteilnehmer-Objekte werden relativ zum Ego-Objekt 31so angezeigt, dass die physische Position und Geschwindigkeit der zugeordneten Verkehrsteilnehmer aus der Anzeige entnehmbar ist. Die Verkehrsteilnehmer-Objekte werden dabei auch entsprechend dem Fahrbahnverlauf gedreht dargestellt, sodass sie beispielsweise von schräg seitlich sichtbar sind, wenn sie einen Bereich der Fahrbahn befahren, der gegenüber der Ausrichtung des Ego-Fahrzeugs 21 gekrümmt ist.

Bei einem weiteren Ausführungsbeispiel umfasst die Anzeigeeinheit 4 ein *Head-up*-Display und zumindest das Fahrspurobjekt 30 der Fahrerinformationsanzeige wird auf diese Weise angezeigt. Es kann insbesondere so angezeigt werden, dass es den tatsächlich von der Position des Fahrers aus wahrgenommenen Fahrspur 20b überlagert erscheint. Der Kurvenbereich 32 wird dann so hervorgehoben, dass der Fahrer die Kritikalität im vor ihm liegenden Bereich bewerten und erkennen kann, dass eine manuelle Verringerung der Geschwindigkeit oder ein zusätzliches Aufbringen eines Lenkmoments zum sicheren Durchfahren der Kurve notwendig ist.

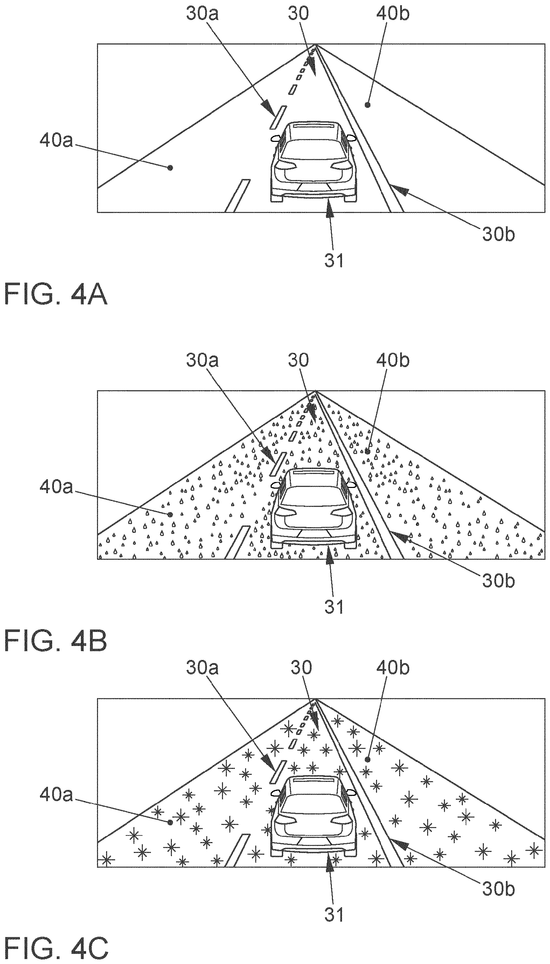

Ein weiteres Ausführungsbeispiel einer Fahrerinformationsanzeige, die bei dem Verfahren unter Berücksichtigung von Wetterdaten gebildet und ausgegeben wird, wird nachfolgend mit Bezug zu den Figuren 4A, 4B und 4C erläutert. Die Anzeige ähnelt der oben mit Bezug zu Figur 3 erläuterten Anzeige. Es werden daher lediglich zusätzliche Merkmale erläutert. Vergleichbare Objekte werden mit den gleichen Bezugszeichen bezeichnet.

Bei diesem Ausführungsbeispiel umfasst die Fahrerinformationsanzeige ferner grafische Elemente 40a, 40b für benachbarte Fahrspuren. Diese sind seitlich neben dem Fahrspurobjekt 30, auf dem das Ego-Objekt 31 angeordnet ist, positioniert und setzen die Fahrbahn perspektivisch dargestellt zur Seite hin fort. Bei dem Ausführungsbeispiel werden lediglich Fahrbahnmarkierungen 30a, 30b an den Rändern des Fahrspurobjekts 30 für die fahrzeugeigene Fahrspur 20b angezeigt. Die dargestellten Markierungstypen entsprechen auch hier den tatsächlich auf der Fahrbahn 20 vorhandenen Markierungen gemäß den zuvor bestimmten Abgrenzungsmarkierungs-Klassen.

Bei dem in Figur 4A gezeigten Fall wurde detektiert, dass die Oberfläche der Fahrbahn trocken ist. Die Fahrobjekte 30, 40a, 40b werden ohne Strukturierung dargestellt, beispielsweise einheitlich schwarz oder grau.

Bei dem in Figur 4B gezeigten Fall wurde detektiert, dass die Oberfläche der Fahrbahn nass ist. Die grafischen Objekte zur Darstellung der eigenen Fahrspur 30 sowie der links 30a und rechts 30b benachbarten Fahrspuren werden mit einem Muster dargestellt, das in dem Beispiel Regentropfen darstellt. Bei anderen Ausführungsbeispielen können andere Strukturierungen dargestellt werden, ferner sind auch dynamische Darstellungen, etwa sich bewegende Strukturen im Bereich der grafischen Objekte 30, 40a, 40b denkbar. Einem weiteren Ausführungsbeispiel werden zudem andere Objekte dargestellt, etwa weitere Verkehrsteilnehmer, deren Spiegelbilder auf der als Regen nass dargestellten Fahrbahn dargestellt werden. Ferner kann Gischt im Bereich von Verkehrsteilnehmer-Objekten dargestellt werden, die sich über die Fahrbahn bewegen.

Bei dem in Figur 4C gezeigten Fall wurde detektiert, dass die Fahrbahn zumindest teilweise mit Schnee bedeckt ist. Analog zu dem in Figur 4B gezeigten Fall werden auch hier die Objekte für die Fahrspuren 30, 30a, 30b strukturiert dargestellt, wobei ein Muster einer Schneeoberfläche gezeigt wird. Auch hier sind andere Strukturierungen sowie dynamische Darstellungen denkbar.

Bei weiteren Ausführungsbeispielen werden die grafischen Objekte für die Fahrspuren 30, 40a, 40b so dargestellt, dass andere Merkmale ihrer Oberfläche repräsentiert werden. Dies können beispielsweise Verschmutzungen, Öl oder Markierungen auf der Fahrbahn sein.

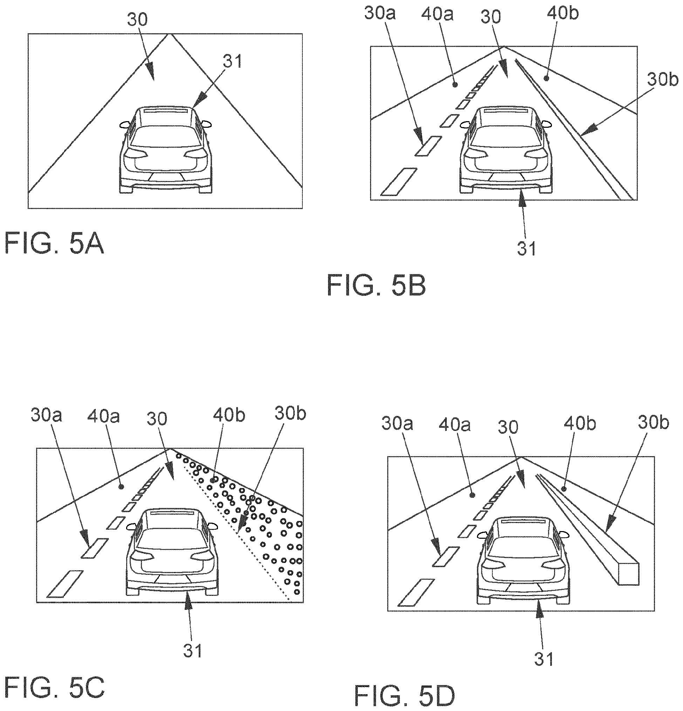

Mit Bezug zu den Figuren 5A bis 5D werden weitere Anzeigen erläutert, die bei dem Verfahren unter Berücksichtigung verschiedener Arten von Fahrbahnmarkierungen erzeugt und ausgegeben werden können. Auch hier wird von dem oben mit Bezug zu Figur 1 erläuterten Fahrerinformationssystem ausgegangen und die Objekte werden, soweit möglich, mit den bereits oben verwendeten Bezugszeichen bezeichnet.

Bei dem in Figur 5A gezeigten Fall wurden keine Fahrbahnmarkierungen auf der Fahrbahn 20 erkannt. Es wird lediglich das Ego-Objekt 31, welches das Ego-Fahrzeug 21 repräsentiert, dargestellt sowie ein Fahrspurobjekt 30, das bei dem Ausführungsbeispiel gleichmäßig grau gezeigt ist. Bei weiteren Ausführungsbeispielen sind andere Darstellungen möglich, jedoch erfolgt die Anzeige so, dass keine einer Fahrbahnmarkierung vergleichbaren Objekte angezeigt werden. Der Fahrer kann dieser Anzeige entnehmen, dass die Fahrt des Ego-Fahrzeugs 21 ohne Orientierung an erkannten Fahrbahnmarkierungen erfolgt, sodass beispielsweise Fahrerassistenzsysteme zur Quersteuerung nur eingeschränkt oder nicht verwendet werden können.

Bei dem in Figur 5B gezeigten Fall wurde erkannt, dass die Fahrspur 20b, auf der sich das Ego-Fahrzeug 21 befindet, links und rechts von Fahrbahnmarkierungen begrenzt wird. Diese wurden den Abgrenzungsmarkierungs-Klassen "gestrichelte Fahrbahnmarkierung" beziehungsweise "durchgezogene Fahrbahnmarkierung" zugeordnet. Ferner wurden benachbarte Fahrspuren erkannt. Die Fahrerinformationsanzeige umfasst neben dem Ego-Objekt 31 und dem Fahrspurobjekt 30, welches die aktuell benutzte Fahrspur 20b repräsentiert, auch grafische Objekte für die links 40a und rechts 40b benachbarten Fahrspuren sowie Fahrbahnmarkierungen 30a, 30b, die gemäß den erfassten Abgrenzungsmarkierungs-Klassen gebildet sind und die wesentlichen Charakteristika, das heißt die gestrichelte beziehungsweise durchgezogene Ausbildung, entsprechend den tatsächlichen Fahrbahnmarkierungen wiedergeben.

Bei dem in Figur 5C gezeigten Fall wurde erkannt, dass - anders als bei dem in Figur 5B gezeigten Fall, die eigene Fahrspur 20b des Ego-Fahrzeugs 21 nicht von einer rechten Fahrspurmarkierung begrenzt wird. Stattdessen wurde ein Übergang von der Fahrbahn zu einem Bankettbereich detektiert. In der Fahrerinformationsanzeige wird dies im Unterschied zur dem in Figur 5B gezeigten Fall dadurch ausgegeben, dass das grafische Objekt 40b für die rechte benachbarte Spur einen Bankettbereich darstellt, der an das Fahrspurobjekt 30 mit dem Ego-Objekt 31 angrenzt.

Der in Figur 5D gezeigte Fall unterscheidet sich von demjenigen der Figur 5B dadurch, dass die aktuelle Fahrspur 20b des Ego-Fahrzeugs 21 rechts von einem Bordstein begrenzt wird. Dies wird in der Fahrerinformationsanzeige dadurch angezeigt, dass rechts neben dem Fahrspurobjekt 30 ein grafisches Abgrenzungsobjekt 30b dargestellt wird, das einen Bordstein repräsentiert.

Bei weiteren Ausführungsbeispielen können Fahrbahnmarkierungen auch Leitplanken, eine Vegetation oder Randbebauung oder andere Abgrenzungsmarkierungen und Strukturen gemäß den verschiedenen Abgrenzungsmarkierungs-Klassen umfassen.

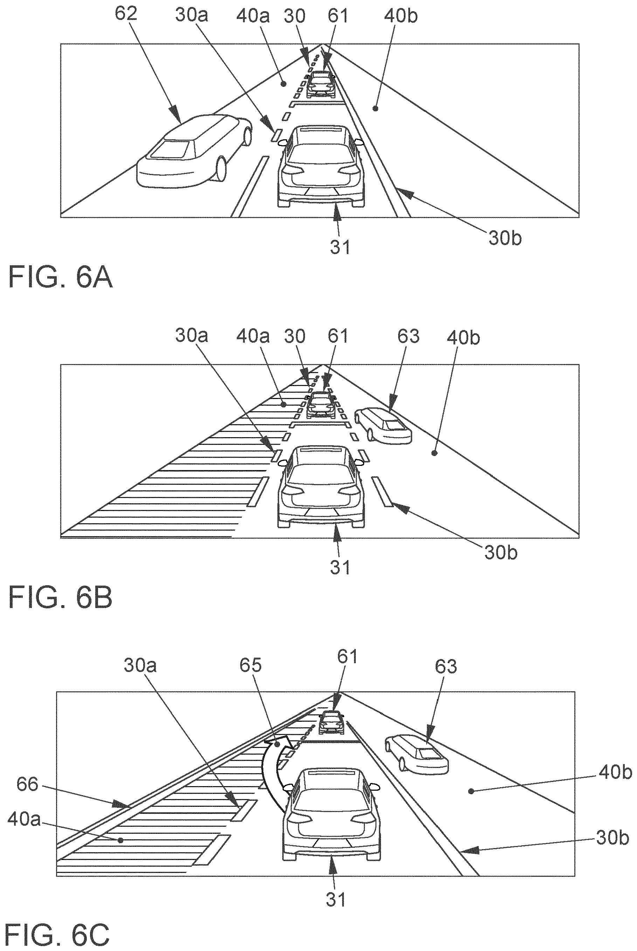

Mit Bezug zu den Figuren 6A bis 6C werden weitere Anzeigen erläutert, die bei dem Verfahren für einen geplanten Spurwechsel erzeugt und ausgegeben werden können. Auch hier wird von dem oben mit Bezug zu Figur 1 erläuterten Fahrerinformationssystem ausgegangen und die Objekte werden, soweit möglich, mit den bereits oben verwendeten Bezugszeichen bezeichnet.

Die Figuren 6A bis 6C umfassen jeweils ein Ego-Objekt 31, welches das Ego-Fahrzeug 21 repräsentiert. Dieses ist statisch gezeigt und stets an der gleichen Position innerhalb der Fahrerinformationsanzeige angeordnet. Die Bewegung des Ego-Fahrzeugs 21 wird dadurch dargestellt, dass die dargestellte Umgebung sich so gegenüber dem Ego-Objekt 31 bewegt, wie dies aus dem Koordinatensystem des Ego-Fahrzeugs 21 erscheint. Insbesondere bewegen sich Strukturen der Fahrbahn gegenüber dem statischen Ego-Objekt 31, einschließlich gekrümmte Bereiche sowie Fahrbahnmarkierungen 30a, 30b, entsprechend der tatsächlichen Eigenbewegung des Ego-Fahrzeugs 21 auf der Fahrbahn 20.

Die Anzeige wird perspektivisch aus einer Position leicht hinter und oberhalb des virtuellen Ego-Objekts 31 gebildet. Die Anzeige umfasst jeweils ein Fahrspurobjekt 30, welches die aktuell genutzt Fahrspur 20b des Ego-Fahrzeugs 21 repräsentiert, sowie Nachbar-Fahrspurobjekte 40a, 40b für benachbarte Fahrspuren 20a.

In allen Fällen wurde zudem ein vorausfahrendes Fahrzeug 23 detektiert, das nunmehr durch ein Verkehrsteilnehmerobjekt 61, das in der Darstellung vor dem Ego-Objekt 31 angeordnet ist, repräsentiert wird. Die Darstellung wird dabei so erzeugt, dass der angezeigte Abstand zwischen dem Ego-Objekt 31 und dem Objekt des vorausfahrenden Fahrzeugs 61 den tatsächlichen Abstand der Fahrzeuge repräsentiert. Das heißt, der Fahrer kann anhand der Anzeige den tatsächlichen Abstand erfassen und insbesondere Änderungen wahrnehmen.

Der weitere Verkehrsteilnehmer wird durch das virtuelle Verkehrsteilnehmerobjekt 61 so dargestellt, dass wesentliche darstellungsrelevante Merkmale seines realen Erscheinungsbildes in der Anzeige wiedergegeben werden. Bei dem Ausführungsbeispiel werden hierzu der Fahrzeugtyp und die Farbe des weiteren Verkehrsteilnehmers 23 erfasst. Die Erfassung erfolgt mittels einer Kamera des Ego-Fahrzeugs 1. Bei weiteren Ausführungsbeispielen wird alternativ oder zusätzlich eine datentechnische Verbindung zu dem weiteren Verkehrsteilnehmer 23 hergestellt, insbesondere mittels *Car2Car*-Kommunikation. Das dem vorausfahrenden Verkehrsteilnehmer 23 zugeordnete grafische Verkehrsteilnehmer-Objekt 61 wird dann so gebildet, dass es die Darstellung den Fahrzeugtyp und die Farbe korrekt wiedergibt. Bei anderen Ausführungsbeispielen können alternativ oder zusätzlich andere Merkmale des vorausfahrenden Fahrzeugs 23 bei der Darstellung des entsprechenden grafischen Verkehrsteilnehmerobjekts 63 wiedergegeben werden.

Die Figuren 6A bis 6C umfassen ferner eine vor dem Ego-Objekt 31 auf dem Fahrspur Objekt 30 angeordnete waagrechte Linie, die einen eingestellten Mindestabstand des Ego-Fahrzeug 21 von dem vorausfahrenden Fahrzeug 23 darstellt.

Bei dem in Figur 6A gezeigten Fall wurde erfasst, dass die aktuelle Fahrspur 20b rechts von einer durchgezogenen und links von einer durchbrochenen Linie begrenzt wird. Die erfassten Fahrbahnmarkierungen wurden entsprechenden Abgrenzungsmarkierungs-Klassen zugeordnet und die Abgrenzungsmarkierungen werden durch Darstellungen entsprechender Fahrbahnmarkierungen 30a, 30b wiedergegeben.

Ferner wurde ein weiterer Verkehrsteilnehmer auf einer links benachbarten Fahrspur erfasst, der sich etwa auf der Höhe des Ego-Fahrzeugs 21 befindet. Die Anzeige umfasst ein entsprechendes grafisches Verkehrsteilnehmer-Objekt 62 auf einem linken Nachbar-Fahrspurobjekt 40a, das die reale Anordnung der Fahrzeuge wiedergibt. In dieser Fahrsituation wurde bestimmt, dass das Ego-Fahrzeug 21 nicht sicher auf die links benachbarte Fahrspur wechseln kann. Das linke Nachbar-Fahrspur Objekt 40a ist daher nicht hervorgehoben, sondern gleichmäßig grau gefärbt.

Bei dem in Figur 6B gezeigten Fall wurde ebenfalls ein weiterer Verkehrsteilnehmer auf einer benachbarten Fahrspur detektiert, diesmal jedoch auf der rechts benachbarten Fahrspur. Die Fahrerinformationsanzeige umfasst daher ein Verkehrsteilnehmer-Objekt 63 im Bereich des rechten Nachbar-Fahrspurobjekts 40b. Es wurde bestimmt, dass ein Spurwechsel auf die links benachbarte Fahrspur sicher durchgeführt werden kann. Das linke Nachbar-Fahrspur Objekt 40a ist daher hervorgehoben dargestellt. Bei diesen und weiteren Ausführungsbeispielen können verschiedene Hervorhebungen genutzt werden, beispielsweise mittels einer Schraffur, Farbe, Helligkeit oder durch einen dynamischen Effekt, beispielsweise ein Blinken.

Bei dem in Figur 6C gezeigten Fall wurde, ausgehend von dem oben mit Bezug zu Figur 6B erläuterten Fall, ferner detektiert, dass der Fahrer das Ego-Fahrzeug 21 einen Blinker nach links aktiviert hat. Er signalisiert dadurch, dass er einen Spurwechsel nach links durchführen will. Das Ego-Objekt 31 wird in der Darstellung mit leuchtendem Blinklicht ausgegeben. Da in der dargestellten Fahrsituation der Spurwechsel nach links sicher durchgeführt werden kann, wird zusätzlich zu der Hervorhebung des linken Nachbar-Fahrspurobjekts 40a ein Pfeil 65 als Signal-Objekt 65 angezeigt. Der Fall ist insbesondere farblich grün gestaltet. Bei weiteren Ausführungsbeispielen kann die Farbe davon abhängen, ob der Spurwechsel sicher durchgeführt werden kann; der Pfeil 65 kann etwa rot gefärbt sein, wenn dies nicht der Fall ist. Ferner kann das Signal-Objekt 65 auch anders ausgebildet sein, zum Beispiel nach Art eines Lauflichts oder mit einem anderen Symbol.

Bei dem in Figur 6C gezeigten Fall wurde ferner erfasst, dass die links benachbarte Fahrspur durch eine durchgezogene Linie nach links hin begrenzt wird. Zudem wird nun die aktuelle Fahrspur 20b des Ego-Fahrzeugs 21 nach rechts hindurch eine durchgezogene Linie begrenzt.

Diese Fahrbahnmarkierungen werden entsprechend in Figur 6C anhand von Abgrenzungsobjekten 30a, 30b, 66 angezeigt.

Bei weiteren Ausführungsbeispielen wird erfasst, dass der weitere Verkehrsteilnehmer 23 ein bestimmtes Fahrmanöver plant. Hierzu werden Lichtsignale eines Fahrtrichtungsanzeigers ausgewertet oder Informationen über eine *Car2Car*-Verbindung empfangen. Es wird ein Fahrmanöver-Objekt bei dem Verkehrsteilnehmer-Objekt 61 angezeigt, das signalisiert, dass das vorausfahrende Fahrzeug 23 beispielsweise einen Spurwechsel plant.

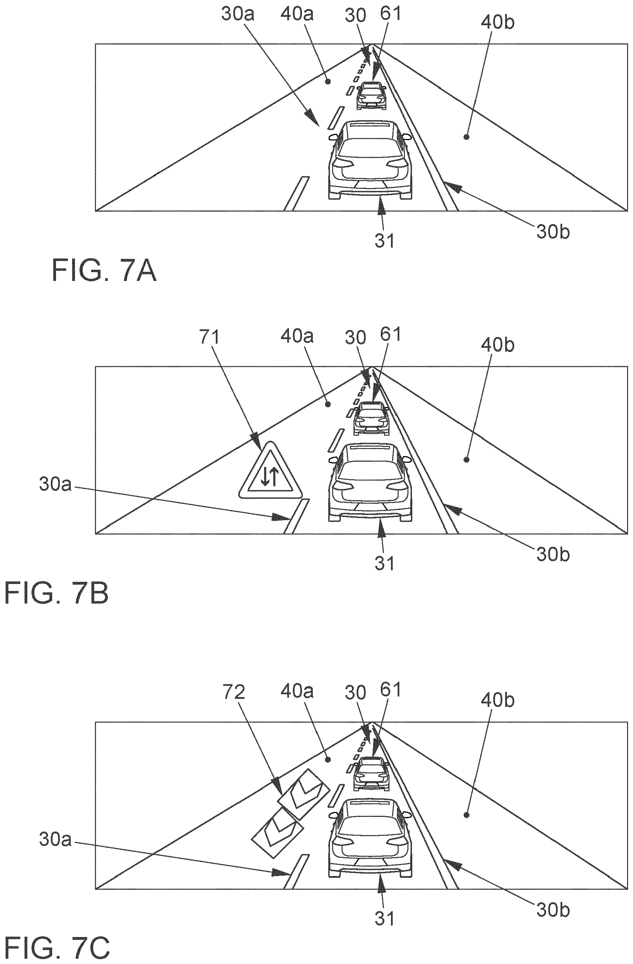

Mit Bezug zu den Figuren 7A bis 7C werden weitere Anzeigen erläutert, die bei dem Verfahren unter Berücksichtigung gegebenenfalls drohenden Gegenverkehrs erzeugt und ausgegeben werden können. Auch hier wird von dem oben mit Bezug zu Figur 1 erläuterten Fahrerinformationssystem ausgegangen und die Objekte werden, soweit möglich, mit den bereits oben verwendeten Bezugszeichen bezeichnet.

Bei dem in Figur 7A gezeigten Fall wurde kein Gegenverkehr auf der Fahrspur des Ego-Fahrzeugs 21 sowie auf den benachbarten Fahrspuren detektiert. Die Darstellung umfasst in diesem Fall das Fahrspurobjekt 30 sowie rechts und links angrenzende Nachbar-Fahrspurobjekte 40a, 40b. Ferner werden ein Ego-Objekt 31 sowie ein vorausfahrendes Fahrzeug 23 durch ein Verkehrsteilnehmer-Objekt 61 dargestellt.

Bei den in den Figuren 7B und 7C gezeigten Fällen wurde erkannt, dass auf der in Fahrtrichtung links neben der aktuellen Fahrspur des Ego-Fahrzeugs 21 angeordneten Fahrspur 20a mit Gegenverkehr zu rechnen ist. Die Darstellungen unterscheiden sich von der oben mit Bezug zu Figur 7A dargestellten Darstellung durch ein grafisches Gegenverkehr-Warnobjekt 71, 72, dass auf dem Nachbar-Fahrspurobjekt 40a angeordnet ist. Die Darstellung erfolgt insbesondere wie bei einer auf der Fahrbahnoberfläche angebrachten Fahrbahnmarkierung.

Bei dem Ausführungsbeispiel bewegt sich das Gegenverkehr-Warnobjekt 71, 72 mit dem Ego-Objekt 31. Bei weiteren Ausführungsbeispielen kann das Gegenverkehr-Warnobjekt 71, 72 im Koordinatensystem der dargestellten Fahrbahnoberfläche statisch sein, sodass sich das Ego-Objekt 31 an dem Gegenverkehr-Warnobjekt 71, 72 vorbei zu bewegen scheint. In diesem Fall kann das Gegenverkehr-Warnobjekt 71, 72 in mehrfacher Ausführung, etwa in periodischen Abständen immer wieder auftauchen, solange auf der benachbarten Fahrspur 20a mit Gegenverkehr zu rechnen ist.

Bei weiteren Ausführungsbeispielen wird alternativ oder zusätzlich ein entgegenkommendes Verkehrsteilnehmer-Objekt im Bereich eines Fahrspurobjekts dargestellt, wenn bestimmt wurde, dass auf der Fahrspur mit Gegenverkehr zu rechnen ist. Das entgegenkommende Verkehrsteilnehmer-Objekt kann dabei so ausgebildet sein, dass es einen tatsächlich entgegenkommenden Verkehrsteilnehmer darstellt. Es kann ferner angezeigt werden, auch wenn kein anderer Verkehrsteilnehmer detektiert wurde, um den Fahrer vor dem potentiellen Auftreten von Gegenverkehr zu warnen. Die Darstellung des entgegenkommenden Verkehrsteilnehmer-Objekts kann sich danach unterscheiden, ob es einen tatsächlich detektierten Verkehrsteilnehmer repräsentiert oder ob es nur zur Warnung angezeigt wird.

Bei einem weiteren Ausführungsbeispiel werden Zustände der Beleuchtungsanlage 7 des Ego-Fahrzeugs 1 erfasst und die Darstellung des Ego-Objekts 31 in der Fahrerinformationsanzeige wird so gebildet, dass sie die Zustände verschiedener Elemente der Beleuchtungseinrichtung 7 wiedergibt. Zum Beispiel können rückwärtige Leuchten und Scheinwerfer entsprechend den erfassten Zuständen beleuchtet oder unbeleuchtet angezeigt werden.

Bei einem weiteren Ausführungsbeispiel wird ein Betriebszustand einer Anhängevorrichtung des Ego-Fahrzeugs 1 erfasst. Einer Anhängevorrichtung des Ego-Fahrzeugs 1 erfasst. Wenn erfasst wird, dass sich ein Anhängerobjekt an der Anhängevorrichtung befindet, dann wird das Ego-Objekt 31 in Kombination mit einer grafischen Anhängerdarstellung gebildet.

Die Anzeige erfolgt dabei so, dass das Ego-Objekt 31 mit der grafischen Anhängerdarstellung perspektivisch so von hinten angezeigt wird, dass ein in der Darstellung vor dem Ego-Objekt 31 liegender Fahrbahnabschnitt des Fahrbahnobjekts 30 sichtbar ist.

Die Anhängerdarstellung kann sich je nach dem Typ des Anhängerobjekts unterscheiden, beispielsweise durch seine Größe, Form und Farbe. Insbesondere wird durch die grafische Anhängerdarstellung einen schematisch vereinfachtes Abbild des realen Anhängerobjekts wiedergegeben.

Die oben erläuterten Ausführungsbeispiele verdeutlichen gemäß den Patentansprüchen notwendige oder optionale Merkmale des erfindungsgemäßen Verfahrens. Die in separaten Ausführungsbeispielen erläuterten Merkmale können beliebig kombiniert werden, insbesondere um die Erfindung in einem umfassenden Verfahren oder System zu verwirklichen.

### Bezugszeichenliste

1 Ego-Fahrzeug
2 Erfassungseinheit; Sensor
3 Steuereinheit
4 Anzeigeeinheit
5 Auswertungseinheit
6 Fahrerassistenzsystem
7 Beleuchtungseinrichtung
8 Anhängevorrichtung
10 Externe Einheit; externer Server
20 Fahrbahn
20a Fahrspur
20b Fahrspur
20c Fahrbahnmarkierung
21 Ego-Fahrzeug
22 Pfeil
23 Vorausfahrendes Fahrzeug
24 Entgegenkommendes Fahrzeug
25 Verkehrsschild
30 Fahrspurobjekt
30a, 30b Fahrbahnmarkierung (Darstellung)
31 Ego-Fahrzeug (Darstellung)
32 Kurvenbereich (Darstellung)
32a, 32b Fahrbahnmarkierung im Kurvenbereich (Darstellung)
33a, 33b Verkehrsschild (Darstellung)
40a, 40b Benachbarte Fahrspur (Darstellung)
61 Verkehrsteilnehmer-Objekt, vorausfahrendes Fahrzeug (Darstellung)
62, 63 Verkehrsteilnehmer-Objekt, Fahrzeug auf benachbarter Fahrspur (Darstellung)
65 Signal-Objekt, Pfeil
71, 72 Gegenverkehr-Warnobjekt

## Patentansprüche

1. Verfahren zum Betreiben eines Fahrerinformationssystems in einem Ego-Fahrzeug (21), bei dem
Wetterdaten für einen in Fahrtrichtung vor dem Ego-Fahrzeug (1) liegenden Fahrbahnabschnitt erfasst werden;
eine Fahrerinformationsanzeige erzeugt und ausgegeben wird; wobei
die Fahrerinformationsanzeige ein grafisches Fahrspurobjekt (30) umfasst, das den vor dem Ego-Fahrzeug (1) liegenden Fahrbahnabschnitt repräsentiert; wobei
das grafische Fahrspurobjekt (30) einen Darstellungsparameter aufweist, der in Abhängigkeit von den Wetterdaten gebildet wird,
**dadurch gekennzeichnet, dass**
ein Fahrbahnverlauf des Fahrbahnabschnitts und ein Krümmungsradius einer Kurve des Fahrbahnverlaufs bestimmt werden;
Bewegungsdaten des Ego-Fahrzeugs (1), welche die aktuelle Geschwindigkeit oder eine prognostizierte Geschwindigkeit beim Einfahren in die Kurve umfassen, erfasst werden
anhand der erfassten Bewegungsdaten und des bestimmten Krümmungsradius' eine Kritikalität bestimmt wird; und
das grafische Fahrspurobjekt (30) ein Hervorhebungsmerkmal aufweist, das in Abhängigkeit von der bestimmten Kritikalität gebildet wird.

2. Verfahren gemäß Anspruch 1,
**dadurch gekennzeichnet, dass**
die Wetterdaten einen Niederschlag und/oder eine Temperatur betreffen.

3. Verfahren gemäß Anspruch 1 oder 2,
**dadurch gekennzeichnet, dass**
die Wetterdaten mittels Sensoren des Ego-Fahrzeugs (1) erfasst werden.

4. Verfahren gemäß einem der vorhergehenden Ansprüche,
**dadurch gekennzeichnet, dass**
eine Position des Ego-Fahrzeugs (1) erfasst wird; und
die Wetterdaten anhand der erfassten Position erfasst werden.

5. Verfahren gemäß einem der vorhergehenden Ansprüche,
**dadurch gekennzeichnet, dass**
das grafische Fahrspurobjekt (30) so gebildet wird, dass es einer perspektivischen Darstellung des Fahrbahnverlaufs entspricht und einen Krümmungsradius so umfasst, dass ein tatsächlicher Krümmungsradius der Kurve ausgegeben wird.

6. Verfahren gemäß einem der vorhergehenden Ansprüche,
**dadurch gekennzeichnet, dass**
ein aktueller Tageslichtzustand erfasst wird; und
die Fahrerinformationsanzeige ferner ein Tageslichtobjekt umfasst, das in Abhängigkeit von dem erfassten Tageslichtzustand gebildet wird.

7. Verfahren gemäß einem der vorhergehenden Ansprüche,
**dadurch gekennzeichnet, dass**
die Fahrerinformationsanzeige ferner ein grafisches Verkehrsschild-Objekt (33a, 33b) umfasst, wobei das Verkehrsschildobjekt (33a, 33b) insbesondere auf dem Fahrspurobjekt (30) oder an seinem Rand angeordnet ist.

8. Fahrerinformationssystem in einem Ego-Fahrzeug (1), mit
einer Erfassungseinheit (2), die dazu eingerichtet ist, Wetterdaten für einen in Fahrtrichtung vor dem Ego-Fahrzeug (1) liegenden Fahrbahnabschnitt zu erfassen;
einer Steuereinheit (3), die dazu eingerichtet ist, eine Fahrerinformationsanzeige zu erzeugen und auszugeben; wobei
die Fahrerinformationsanzeige ein grafisches Fahrspurobjekt (30) umfasst, das den vor dem Ego-Fahrzeug (1) liegenden Fahrbahnabschnitt repräsentiert; wobei
das grafische Fahrspurobjekt (30) einen Darstellungsparameter aufweist; und
die Steuereinheit (3) dazu eingerichtet ist, den Darstellungsparameter in Abhängigkeit von den Wetterdaten zu bilden,
**dadurch gekennzeichnet, dass**
die Erfassungseinheit (2) dazu eingerichtet ist, Bewegungsdaten des Ego-Fahrzeugs (1), welche die aktuelle Geschwindigkeit oder eine prognostizierte Geschwindigkeit beim Einfahren in die Kurve umfassen, zu erfassen;
das Fahrerinformationssystem eine Auswertungseinheit (5) aufweist, die dazu eingerichtet ist, einen Fahrbahnverlauf des Fahrbahnabschnitts und ein Krümmungsradius einer Kurve des Fahrbahnverlaufs zu bestimmen sowie anhand der erfassten Bewegungsdaten und des bestimmten Krümmungsradius' eine Kritikalität zu bestimmen; und
die Steuereinheit (3) dazu eingerichtet ist, das grafische Fahrspurobjekt (30) so zu erzeugen, dass es ein Hervorhebungsmerkmal aufweist, das in Abhängigkeit von der bestimmten Kritikalität gebildet wird.

9. Fahrerinformationssystem gemäß Anspruch 8,
**dadurch gekennzeichnet, dass**
die Anzeigeeinheit (4) eine Blickfeldanzeige zum Ausgeben der Fahrerinformationsanzeige umfasst.

## Claims

1. Method for operating a driver information system in an ego vehicle (21), in which
weather data for a road section which is located in front of the ego vehicle (1) in the direction of travel are detected;
a driver information display is generated and output;
the driver information display having a graphical lane object (30) that represents the road section located in front of the ego vehicle (1);
the graphical lane object (30) comprising a display parameter formed on the basis of the weather data,
**characterized in that**
a road course of the road section and a radius of curvature of a curve of the road course are determined;
movement data of the ego vehicle (1) including the current speed or a predicted speed when driving into the curve are detected;
a criticality is determined on the basis of the detected movement data and the determined radius of curvature; and
the graphical lane object (30) comprises a highlighting feature formed on the basis of the determined criticality.

2. Method according to claim 1,
**characterized in that**
the weather data relate to precipitation and/or temperature.

3. Method according to either claim 1 or claim 2,
**characterized in that**
the weather data are detected by means of sensors of the ego vehicle (1).

4. Method according to any of the preceding claims,
**characterized in that**
a position of the ego vehicle (1) is detected; and
the weather data are detected on the basis of the detected position.

5. Method according to any of the preceding claims,
**characterized in that**
the graphical lane object (30) is formed such that it corresponds to a perspective view of the road course and has a radius of curvature such that an actual radius of curvature of the curve is output.

6. Method according to any of the preceding claims,
**characterized in that**
a current daylight status is detected; and
the driver information display further includes a daylight object formed on the basis of the detected daylight status.

7. Method according to any of the preceding claims,
**characterized in that**
the driver information display further includes a graphical traffic sign object (33a, 33b), the traffic sign object (33a, 33b) being arranged in particular on the lane object (30) or at its edge.

8. Driver information system in an ego vehicle (1), comprising
a detection unit (2) which is configured to detect weather data for a road section located in front of the ego vehicle (1) in the direction of travel;
a control unit (3) which is configured to generate and output a driver information display;
the driver information display including a graphical lane object (30) that represents the road section located in front of the ego vehicle (1);
the graphical lane object (30) comprising a display parameter; and
the control unit (3) being configured to form the display parameter on the basis of the weather data,
**characterized in that**
the detection unit (2) is configured to detect movement data of the ego vehicle (1) including the current speed or a predicted speed when driving into the curve;
the driver information system comprises an evaluation unit (5) which is configured to determine a road course of the road section and a radius of curvature of a curve of the road course and to determine a criticality on the basis of the detected movement data and the determined radius of curvature; and
the control unit (3) is configured to generate the graphical lane object (30) such that it comprises a highlighting feature formed on the basis of the determined criticality.

9. Driver information system according to claim 8,
**characterized in that**
the display unit (4) comprises a field-of-view display for outputting the driver information display.

## Revendications

1. Procédé pour faire fonctionner un système d'information du conducteur dans un égo-véhicule (21), dans lequel
des données météorologiques sont détectées pour une section de chaussée se trouvant dans le sens de circulation devant l'égo-véhicule (1) ;
un affichage d'information du conducteur est généré et émis ; dans lequel
l'affichage d'information du conducteur comprend un objet de voie de circulation graphique (30), qui représente la section de route se trouvant devant l'égo-véhicule (1) ; dans lequel
l'objet de voie de circulation graphique (30) présente un paramètre de présentation, qui est formé en fonction des données météorologiques,
**caractérisé en ce que**
un tracé de route de la section de route et un rayon de courbure d'un virage du tracé de route sont déterminés ;
des données de mouvement de l'égo-véhicule (1), qui comprennent la vitesse actuelle ou une vitesse prédite lors de l'entrée dans le virage, sont détectées :
une criticité est déterminée à l'aide des données de déplacement détectées et du rayon de courbure déterminé ; et
l'objet de voie de circulation graphique (30) présente une caractéristique d'accentuation, qui est formée en fonction de la criticité déterminée.

2. Procédé selon la revendication 1,
**caractérisé en ce que**
les données météorologiques concernent une précipitation et/ou une température.

3. Procédé selon la revendication 1 ou 2,
**caractérisé en ce que**
les données météorologiques sont détectées au moyen de capteurs de l'égo-véhicule (1).

4. Procédé selon l'une quelconque des revendications précédentes,
**caractérisé en ce que**
une position de l'égo-véhicule (1) est détectée ; et
les données météorologiques sont détectées à l'aide de la position détectée.

5. Procédé selon l'une quelconque des revendications précédentes,
**caractérisé en ce que**
l'objet de voie de circulation graphique (30) est formé de sorte à correspondre à une présentation en perspective du tracé de route et comprend un rayon de courbure de sorte à émettre un rayon de courbure réel du virage.

6. Procédé selon l'une quelconque des revendications précédentes,
**caractérisé en ce que**
un état de lumière du jour est détecté ; et
l'affichage d'information du conducteur comprend en outre un objet de lumière du jour, lequel est formé en fonction de l'état de lumière du jour détecté.

7. Procédé selon l'une quelconque des revendications précédentes,
**caractérisé en ce que**
l'affichage d'information du conducteur comprend en outre un objet de panneau de signalisation graphique (33a, 33b), dans lequel l'objet de panneau de signalisation (33a, 33b) est agencé en particulier sur l'objet de voie de circulation (30) ou sur son bord.

8. Système d'information du conducteur dans un égo-véhicule (1), comprenant
une unité de détection (2), qui est conçue pour détecter des données météorologiques pour une section de route se trouvant dans le sens de circulation devant l'égo-véhicule (1) ;
une unité de commande (3), qui est conçue pour produire et émettre un affichage d'information du conducteur ; dans lequel
l'affichage d'information du conducteur comprend un objet de voie de circulation graphique (30), qui représente la section de route se trouvant devant l'égo-véhicule (1) ; dans lequel
l'objet de voie de circulation graphique (30) présente un paramètre de présentation ; et
l'unité de commande (3) est conçue pour former le paramètre de présentation en fonction des données météorologiques,
**caractérisé en ce que**
l'unité de détection (2) est conçue pour détecter des données de mouvement de l'égo-véhicule (1), qui comprennent la vitesse actuelle ou une vitesse prédite lors de l'entrée dans le virage ;
le système d'information du conducteur présente une unité d'évaluation (5), qui est conçue pour déterminer un tracé de route de la section de route et un rayon de courbure d'un virage du tracé de route ainsi que pour déterminer une criticité à l'aide des données de mouvement détectées et du rayon de courbure déterminé ; et
l'unité de commande (3) est conçue pour générer l'objet de voie de circulation graphique (30) de sorte qu'il présente une caractéristique d'accentuation, qui est formée en fonction de la criticité déterminée.

9. Système d'information du conducteur selon la revendication 8,
**caractérisé en ce que**
l'unité d'affichage (4) comprend un affichage tête haute pour l'émission de l'affichage d'information du conducteur.
